# EUROPÄISCHE PATENTSCHRIFT

(11) **EP 2 394 068 B1**
(45) Veröffentlichungstag und Bekanntmachung des Hinweises auf die Patenterteilung: **12.06.2013**
(21) Anmeldenummer: 10702445.7
(22) Anmeldetag: 02.02.2010
(51) Int. Cl.: F16D 37/02, F16F 9/53

(54) **SCHALTBARE MAGNETORHEOLOGISCHE DREHMOMENT- ODER KRAFTÜBERTRAGUNGSVORRICHTUNG, DEREN VERWENDUNG SOWIE MAGNETORHEOLOGISCHES DREHMOMENT- ODER KRAFTÜBERTRAGUNGSVERFAHREN**
SWITCHABLE MAGNETORHEOLOGICAL TORQUE OR FORCE TRANSMISSION DEVICE, THE USE THEREOF, AND MAGNETORHEOLOGICAL TORQUE OR FORCE TRANSMISSION METHOD
DISPOSITIF MAGNÉTORHÉOLOGIQUE COMMUTABLE POUR LA TRANSMISSION DE COUPLE OU DE FORCE, SON UTILISATION ET PROCÉDÉ MAGNÉTORHÉOLOGIQUE DE TRANSMISSION DE COUPLE OU DE FORCE

(30) Priorität: 03.02.2009 DE 102009007209
(43) Veröffentlichungstag der Anmeldung: 14.12.2011
(73) Patentinhaber: Fraunhofer-Gesellschaft zur Förderung der angewandten Forschung e.V., 80686 München (DE)
(72) Erfinder: BÖSE, Holger, 97080 Würzburg (DE); EHRLICH, Johannes, 97355 Wiesenbronn (DE)
(74) Vertreter: Pfenning, Meinig & Partner GbR
(86) Internationale Anmeldenummer: PCT/EP2010/000628
(87) Internationale Veröffentlichungsnummer: WO 2010/089082

(56) Entgegenhaltungen:
- EP-A1- 2 065 614
- WO-A1-2008/024957
- WO-A1-2008/052799
- WO-A1-2008/131937
- DE-A1-102004 041 650
- DE-A1-102006 037 992
- FR-A1- 2 930 655

## Beschreibung

Die vorliegende Erfindung bezieht sich auf eine magnetorheologische Drehmomentübertragungsvorrichtung oder Kraftübertragungsvorrichtung, deren Verwendung sowie auf ein entsprechendes magnetorheologisches Drehmomentübertragungsverfahren oder Kraftübertragungsverfahren. Die magnetorheologische Übertragungsvorrichtung kann hierbei insbesondere als Bremse oder als Kupplung, als Stoßdämpfer oder Schwingungsdämpfer oder als Feststell- oder Blockiervorrichtung eingesetzt werden.

Magnetorheologische Flüssigkeiten (MRF) sind Suspensionen von magnetisch polarisierbaren Teilchen in einer Trägerflüssigkeit, deren Viskosität und andere rheologische Eigenschaften in einem Magnetfeld schnell und reversibel verändert werden können. Sie bieten damit eine ideale Grundlage für adaptive Drehmomentübertragungsvorrichtungen (z.B. Kupplungen oder Bremsen), deren übertragene Drehmomente durch das Magnetfeld gesteuert werden. So überträgt beispielsweise in einer Kupplung die MRF zwischen zwei sich mit unterschiedlicher Geschwindigkeit drehenden Platten (nachfolgend auch Vorrichtungsteile genannt) überwiegend durch Scherung ein Drehmoment von einer Platte (Antriebsseite) auf die andere (Abtriebsseite), wobei die Konsistenz der MRF und damit das übertragene Drehmoment über die Stärke des angelegten Magnetfeldes beeinflusst wird. Ist die Platte der Abtriebsseite gegenüber der Rotation blockiert, entsteht eine Bremse mit steuerbarer Bremskraft. Solche magnetorheologischen Kupplungen und Bremsen sind bereits bekannt. Auch MRF, wie sie in der vorliegenden Erfindung eingesetzt werden können, sind bereits bekannt: Das Patent DE 10 2004 041 650 B4 zeigt solche magnetorheologischen Flüssigkeiten.

In einer magnetorheologischen (MR-)Kupplung, Bremse oder Dämpfungsvorrichtung wird das Magnetfeld durch den Strom in der Spule eines Elektromagneten erzeugt und durch den Magnetkreis in den aktiven Spalt (nachfolgend auch Kraftübertragungs- bzw. Drehmomentübertragungsspalt) geführt, in dem die MRF versteift wird. MR-Kupplungen bzw. -Bremsen üben ohne Strom in der Spule eine geringe Drehmomentübertragung aus (Auskuppeln bzw. Freilauf), während mit steigendem Spulenstrom die Drehmomentübertragung immer größer wird (Einkuppeln bzw. Bremsen). Ohne Spulenstrom erfolgt eine minimale Drehmomentübertragung durch die Flüssigkeitsreibung (Schleppmoment).

Magnetorheologische Dämpfungsvorrichtungen üben ohne Strom in der Spule des Elektromagneten eine geringe Dämpfungskraft aus (weiche Dämpfung), während mit steigendem Spulenstrom die Dämpfungskraft immer größer wird (harte Dämpfung). Die Dämpfungskraft kann dabei so stark erhöht werden (entsprechend großer Spulenstrom), dass eine vollständige Blockierung erzielt wird.

Die aus dem Stand der Technik bekannten MR-Kupplungen und -Bremsen erzeugen das Magnetfeld durch Elektromagnete in Form von Spulen, d.h. ihr Magnetkreissystem enthält Spulen zur Erzeugung des magnetischen Flusses im Drehmomentübertragungsspalt. Damit ist es nicht möglich, einen gewünschten Betriebszustand mit hoher Drehmomentübertragung ohne den Einsatz von elektrischer Energie zu erzeugen, und es ist kein gutes Fail-Safe-Verhalten der Kupplung bzw. Bremse gegeben, da im Fall eines Ausfalls der elektrischen Energieversorgung in der Kupplung bzw. Bremse nur das minimale Drehmoment übertragen wird.

Aufgabe der vorliegenden Erfindung ist es somit, eine magnetorheologische Kraftübertragungsvorrichtung oder Drehmomentübertragungsvorrichtung (sowie entsprechende Übertragungsverfahren) zur Verfügung zu stellen, mit welchen unter möglichst geringem Energieaufwand ein zu übertragendes Drehmoment bzw. eine zu übertragende Kraft mit hoher Genauigkeit und gezielt eingestellt werden kann und mit denen ein deutlich verbessertes Fail-Safe-Verhalten realisiert werden kann.

Diese Aufgabe wird durch die magnetorheologische Drehmomentübertragungsvorrichtung, das magnetorheologische Drehmomentübertragungsverfahren, die magnetorheologische Kraftübertragungsvorrichtung und das magnetorheologische Kraftübertragungsverfahren nach den nebengeordneten Ansprüchen 1, 31, 2 und 32 gelöst. Vorteilhafte Ausgestaltungsformen hierzu beschreiben die jeweils abhängigen Ansprüche. Erfindungsgemäße Verwendungen lassen sich dem Anspruch 30 entnehmen.

Nachfolgend wird die vorliegende Erfindung zunächst allgemein beschrieben. Für beide Vorrichtungen (bzw. die entsprechenden Verfahren) werden anschließend detaillierte Ausführungsbeispiele gegeben.

Die in den einzelnen Ausführungsbeispielen konkret dargelegten Merkmalskombinationen lassen sich gemäß der Patentansprüche im Rahmen der vorliegenden Erfindung basierend auf dem Fachwissen des Fachmannes auch in beliebigen anderen Kombinationen einsetzen.

Die grundlegende Idee der Lösung der erfindungsgemäßen Aufgabe basiert darauf, im zur Erzeugung des magnetischen Flusses im Übertragungsspalt (Drehmomentübertragungsspalt oder Kraftübertragungsspalt) ausgebildeten Magnetkreissystem der Vorrichtung nicht nur mindestens einen Elektromagneten (umfassend mindestens eine Spule) vorzusehen, sondern darüber hinaus auch mindestens einen Permanentmagneten, wobei der Permanentmagnet eine veränderliche Magnetisierung aufweist und wobei dieser Permanentmagnet mit veränderlicher Magnetisierung und der Elektromagnet so ausgebildet und angeordnet sind, dass die Magnetisierung dieses Permanentmagneten durch Veränderung des Spulenstromes des Elektromagneten einstellbar ist. Die Magnetisierung dieses Permanentmagneten lässt sich also beispielsweise durch einen nur sehr kurzzeitig fließenden Strom in einer Spule des Elektromagneten auf einen gewünschten Wert einstellen, so dass sich die übertragene Kraft bzw. das übertragene Drehmoment verändern lässt, indem lediglich kurzzeitig Energie zur Änderung des Magnetisierungszustandes dieses Permanentmagneten aufgewendet werden muss.

Die Einstellung des magnetischen Arbeitspunktes (welcher das magnetische Grundfeld bei ausgeschaltetem Spulenstrom bestimmt) erfolgt bei der vorliegenden Erfindung somit durch das Vorsehen mindestens eines Permanentmagneten mit veränderlicher Magnetisierung, durch dessen Form und/oder Anordnung (relativ zur Anordnung der Spule des Elektromagneten), sowie vorteilhafterweise, wie nachfolgend noch näher beschrieben wird, auch durch das zusätzliche Vorsehen mindestens eines nichtmagnetischen Einsatzes sowie durch dessen Form und/oder Anordnung relativ zu den im Magnetkreis vorgesehenen Elektromagneten und Permanentmagneten (es können jeweils auch mehrere Elektromagnete und/oder mehrere derartige Permanentmagnete vorgesehen sein).

In einer besonders vorteilhaften Ausführungsvariante ist das zum Erzeugen des magnetischen Flusses in zumindest einem Teil des Übertragungsspaltes ausgebildete Magnetkreissystem der Übertragungsvorrichtung so ausgebildet, dass es neben dem mindestens einen Elektromagneten mindestens zwei Permanentmagnete mit veränderlicher Magnetisierung umfasst, wobei diese beiden Permanentmagnete mit veränderlicher Magnetisierung über ein magnetisch leitfähiges Material miteinander magnetisch gekoppelt sind. Diese vorteilhafte Variante kann somit als eine Ausführungsform angesehen werden, bei der ein vorhandener Permanentmagnet mit veränderlicher Magnetisierung in zwei Teile geteilt ist, die dann über ein magnetisch leitendes Material verbunden sind. Wiederum sind der Elektromagnet und diese beiden Permanentmagnete mit veränderlicher Magnetisierung so ausgebildet und angeordnet, dass die Magnetisierung dieser beiden Permanentmagnete durch Veränderung des Spulenstromes des Elektromagneten einstellbar ist.

Vorteilhafterweise ist/sind neben dem mindestens einen Permanentmagneten mit veränderlicher Magnetisierung auch ein oder mehrere Permanentmagnet(en) mit nicht-veränderlicher Magnetisierung vorgesehen; dies wird nachfolgend noch näher beschrieben. Es sind somit mehrere Elektromagnete und/oder mehrere Permanentmagnete veränderlicher wie nicht-veränderlicher Art im Magnetkreissystem möglich.

Der Unterschied zwischen einem Permanentmagneten mit veränderlicher Magnetisierung und einem Permanentmagneten mit nicht-veränderlicher Magnetisierung ergibt sich hierbei definitionsgemäß durch die Koerzitivfeldstärke ⱼH_{c}. Sofern nicht anders gesagt, wird unter dem Begriff der Koerzitivfeldstärke jeweils die Koerzitivfeldstärke der magnetischen Polarisation verstanden. Im Rahmen der vorliegenden Erfindung ist somit ein Permanentmagnet mit veränderlicher Magnetisierung in der Regel ein Magnet, der ein Material enthält oder daraus besteht, dessen Koerzitivfeldstärke ⱼH_{c} zwischen 5 und 300 kA/m, bevorzugt zwischen 20 und 200 kA/m, besonders bevorzugt zwischen 30 und 100 kA/m liegt. Ein Permanentmagnet mit nicht-veränderlicher Magnetisierung enthält dem gegenüber in der Regel ein Material oder besteht daraus, dessen Koerzitivfeldstärke größer als 300 kA/m, bevorzugt größer als 500 kA/m, bevorzugt größer als 1.000 kA/m und besonders bevorzugt größer als 1.500 kA/m ist.

Im Rahmen der Erfindung wird vorteilhafterweise zusätzlich zu dem (mindestens) einen Permanentmagneten mit veränderlicher Magnetisierung auch (mindestens) ein Permanentmagnet mit nicht-veränderlicher Magnetisierung dergestalt eingesetzt, dass dessen Material eine Koerzitivfeldstärke aufweist, die um mindestens den Faktor 2, bevorzugt mindestens den Faktor 4, bevorzugt mindestens den Faktor 8, bevorzugt mindestens den Faktor 16, bevorzugt mindestens den Faktor 32, größer ist, als die Koerzitivfeldstärke desjenigen Materials, aus dem die Permanentmagneten mit veränderlicher Magnetisierung sind.

Durch den zusätzlichen Permanentmagneten mit nicht-veränderlicher Magnetisierung kann ein sehr hoher stromloser Arbeitspunkt eingestellt werden. Gleichzeitig trägt der Permanentmagnet mit veränderbarer Magnetisierung zum Fail-Safe-Verhalten bei. Der Permanentmagnet mit nicht-veränderlicher Magnetisierung stellt ein Fail-Safe-Verhalten im entmagnetisierten Zustand des Permanentmagneten mit veränderlicher Magnetisierung sicher, falls ein elektrischer Energieeintrag von außen nicht mehr möglich ist. Durch das Ummagnetisieren des Permanentmagneten mit veränderlicher Magnetisierung ist nur sehr wenig elektrische Energie von außen nötig, um einen beliebigen Betriebspunkt zu erreichen. Das System arbeitet somit sehr energieeffizient.

Die extremen Betriebsmodi können durch Verstärkung oder Abschwächung der einzelnen magnetischen Quellen realisiert werden:
- Permanentmagnet mit veränderlicher Magnetisierung entmagnetisiert, Permanentmagnet mit nicht-veränderlicher Magnetisierung wirkt alleine.
- Permanentmagnet mit veränderlicher Magnetisierung aufmagnetisiert und verstärkt die magnetische Wirkung vom Permanentmagnet mit nicht-veränderlicher Magnetisierung.
- Permanentmagnet mit veränderlicher Magnetisierung entgegengesetzt aufmagnetisiert und schwächt die magnetische Wirkung vom Permanentmagnet mit nicht-veränderlicher Magnetisierung.
- Permanentmagnet mit veränderlicher Magnetisierung aufmagnetisiert und verstärkt zusammen mit dem Elektromagneten die magnetische Wirkung vom Permanentmagnet mit nicht-veränderlicher Magnetisierung.
Der Permanentmagnet mit veränderlicher Magnetisierung ist vorzugsweise so ausgelegt, dass er bei voller Magnetisierung in entgegengesetzter Magnetfeldorientierung des Permanentmagnet mit nicht-veränderlicher Magnetisierung ausgerichtet ist, so dass das Magnetfeld sich im MRF-Spalt aufhebt.

Für das Material der Permanentmagneten mit veränderlicher Magnetisierung eignet sich insbesondere eine AlNiCo-Legierung oder ein Ferrit-Material, z.B. eine Mischung aus Barium- oder Strontiumoxid mit Eisenoxid. Für die Permanentmagneten mit nicht-veränderlicher Magnetisierung eignen sich vor allem SmCo-Legierungen, wie SmCo₅ oder Sm₂Co₁₇, oder NdFeB-Legierungen.

Unter einem Magnetkreissystem wird im folgenden die Summe aller einzelnen Magnetkreise bzw. magnetischen Kreise der magnetorheologischen Übertragungsvorrichtung verstanden. Ebenso steht dieser Begriff für die Summe aller einzelnen Bauelemente (z.B. also Spulen, Permanentmagnete, nicht-magnetische Einsätze, Flussführungselemente bzw. Jochteile (z.B. aus Eisen) ...), die den einzelnen Magnetkreisen angehören bzw. diese ausbilden. Was jeweils gemeint ist, erschließt sich dem Fachmann unmittelbar aus dem jeweiligen Zusammenhang. Unter einem einzelnen Magnetkreis (der zusammen mit den anderen Magnetkreisen das Magnetkreissystem ausbildet) wird im folgenden ein definierter Raumbereich verstanden, der von den geschlossenen magnetischen Feldlinien eines Magnetfelderzeugers (Permanentmagnet oder Spule) überstrichen wird. Der definierte Raumbereich kann dabei auch durch die geschlossenen Feldlinien mehrerer Magnetfelderzeuger überstrichen werden (die geschlossenen Feldlinien der mehreren Felderzeuger verlaufen dann im wesentlichen parallel zueinander). Es ist dabei auch nicht ausgeschlossen, dass die Feldlinien eines weiteren Magnetfelderzeugers, welcher nicht dem betrachteten, sondern einem anderen Magnetkreis angehört, abschnittsweise ebenfalls in diesem definierten Raumbereich verlaufen. Die Definition des Magnetkreises kann sich hierbei insbesondere auch auf einen definierten Betriebszustand des Systems (insbesondere eine definierte Stromflussrichtung in der Spule oder den Spulen des Elektromagneten oder der Elektromagnete) beziehen: Es ist also nicht ausgeschlossen, dass bei einem anderen Betriebszustand dieselbe räumliche Anordnung und körperliche Ausgestaltung der das System bildenden Elemente (Permanentmagnete, Elektromagnete, nicht-magnetische Einsätze,...) ein anderes Magnetkreissystem ausbildet. So kann nachfolgend z.B. eine Formulierung wie "der Elektromagnet ist in einem Magnetkreis ohne den Permanentmagnet angeordnet" bedeuten, dass in einem der beiden (je nach Stromflussrichtung in der Spule des Elektromagneten) möglichen Betriebszustände der den Elektromagneten umfassende Magnetkreis nicht auch den Permanentmagneten umfasst, ohne jedoch auszuschließen, dass im anderen Betriebszustand der Permanentmagnet ebenfalls von diesem Magnetkreis umfasst wird. Ebenso umfasst der Begriff des Magnetkreises all diejenigen Bauelemente oder Bauelementteile (also z.B. Spule, ferromagnetische Gehäuseteile, z.B. als Jochteile ausgebildet, nicht-magnetische Elemente, ...) der Übertragungsvorrichtung, welche von besagten geschlossenen Feldlinien des Magnetfelderzeugers überstrichen oder eingeschlossen werden.

In einer vorteilhaften Ausgestaltungsform umfasst das Magnetkreissystem der Übertragungsvorrichtung neben der mindestens einen Spule und dem mindestens einen veränderlichen Permanentmagneten darüberhinaus noch mindestens einen magnetflussregulierenden nicht-magnetischen Einsatz oder einen magnetischen Isolator (es können also mehrere solche Einsätze bzw. Isolatoren vorhanden sein). Ein magnetischer Isolator ist ein räumliches Element, welches eine Permeabilität µ kleiner 2 besitzt. Magnetische Isolatoren schirmen oder leiten den magnetischen Fluss über definierte andere räumliche Elemente.

Ein magnetflussregulierender Einsatz hat in der Regel eine Permeabilität µ von kleiner 10. Durch die räumliche Ausgestaltung des Einsatzes wird die Stärke, aber auch die räumliche Ausbildung des Magnetfeldes beeinflusst.

In einer weiteren vorteilhaften Ausgestaltungsform ist die erfindungsgemäße Übertragungsvorrichtung so aufgebaut, dass zwei oder drei im wesentlichen getrennte (dies wird nachfolgend noch näher beschrieben) Magnetkreise ausgebildet werden (das Magnetkreissystem besteht dann aus diesen zwei oder drei einzelnen Magnetkreisen).

Ein wesentlicher Aspekt der vorliegenden Erfindung ist somit, dass zur Steuerung der Drehmomentübertragung zwischen den beiden gegeneinander rotierbaren Vorrichtungsteilen einer Drehmomentübertragungsvorrichtung oder zur Steuerung der Kraftübertragung zwischen den beiden relativ zueinander translatorisch verschiebbaren Vorrichtungsteilen einer Kraftübertragungsvorrichtung mittels der MRF ein von mindestens einer Spule und/oder mindestens einem Permanentmagneten mit mittels dieser Spule veränderlicher Magnetisierung erzeugtes, sowie vorteilhafterweise darüber hinaus von mindestens einem nicht-magnetischen Einsatz reguliertes Magnetfeld verwendet wird.

Durch die zusätzliche Verwendung eines solchen Permanentmagneten im Magnetkreissystem kann ein magnetisches Basisfeld auch ohne Strom in der Spule des Elektromagneten erzeugt werden. Durch den Spulenstrom des Elektromagneten lässt sich dieses Magnetfeld dann, abhängig von der Richtung des Stromes in der Spule, entweder abschwächen oder verstärken. Durch das Basisfeld erzeugt allein der veränderliche Permanentmagnet eine Grunddämpfung ohne Energieeinsatz (Kraftübertragungsvorrichtung) bzw. ein Grunddrehmoment ohne Energieeinsatz (Drehmomentübertragungsvorrichtung). Damit kann ein Fail-Safe-Verhalten für den Fall gewährleistet werden, dass die elektrische Energieversorgung ausfällt (Kraftübertragungsvorrichtung) bzw. das für den normalen Betriebszustand erforderliche Drehmoment vorgegeben oder ein Fail-Safe-Verhalten für den Fall gewährleistet werden, dass die elektrische Energieversorgung ausfällt (Drehmomentübertragungsvorrichtung).

Ein besonders vorteilhafter, weiterer Erfindungsaspekt ist, dass neben dem veränderlichen Permanentmagneten auch mindestens ein weiterer, hinsichtlich seiner Magnetisierung nicht-veränderlicher Permanentmagnet vorgesehen ist.

Damit kann das Magnetfeld des Permanentmagneten mit veränderlicher Magnetisierung durch den Permanentmagneten mit nicht-veränderlicher Magnetisierung entweder verstärkt oder geschwächt, unter geeigneten Bedingungen sogar aufgehoben werden, ohne dass dauerhaft Energie durch den Elektromagneten aufgewendet werden muss. Der Elektromagnet dient hier dazu, die Magnetisierung des Permanentmagneten mit veränderlicher Magnetisierung zu verändern. Damit ist eine höhere bleibende Gesamtmagnetisierung durch die Überlagerung der Permanentmagneten mit veränderbarer und nicht-veränderbarer Magnetisierung möglich, als nur durch den Permanentmagnet mit veränderbarer Magnetisierung.

Gegenstand der vorliegenden Erfindung ist somit eine MRF-Drehmomentübertragungsvorrichtung bzw. MRF-Kraftübertragungsvorrichtung, bei der die Magnetisierung mindestens eines Permanentmagneten (veränderlicher Permanentmagnet) durch den Strom der Spule des Elektromagneten entweder verstärkt oder reduziert oder sogar in seiner Ausrichtung umgekehrt werden kann. Hierzu befindet sich der in seiner Magnetisierung veränderliche Permanentmagnet vorzugsweise im selben Magnetkreis, wie die diese Veränderung der Magnetisierung hervorrufende Spule. Wie bereits vorbeschrieben, ist vorteilhafterweise zusätzlich auch mindestens ein weiterer Permanentmagnet, dessen Magnetisierung nicht verändert wird (nicht-veränderlicher Permanentmagnet) z.B. in einen separaten Magnetkreis integriert, dessen magnetischer Fluss sich mit dem magnetischen Fluss des zuvor genannten Magnetkreises aus Elektromagnet/Spule und veränderlichem Permanentmagnet in einer vorteilhaften Ausführungsform in ein und demselben Teil mindestens eines aktiven MRF-Spaltes (Übertragungsspalt) überlagert.

Die erfindungsgemäßen Drehmoment- bzw. Kraftübertragungsvorrichtungen weisen im Gegensatz zu den aus dem Stand der Technik bekannten Vorrichtungen die folgenden besonderen Vorteile auf:
- Durch die Kombination aus der Spule mit dem veränderlichen Permanentmagneten kann letzterer durch einen kurzzeitigen Strom in der Spule schnell und einfach auf eine gewünschte Magnetisierung und damit die Kupplung, die Bremse, die Dämpfungsvorrichtung etc. auf ein gewünschtes zu übertragendes Drehmoment bzw. auf eine gewünschte zu übertragende Dämpfungskraft eingestellt werden, wobei Drehmoment oder Dämpfungskraft auch nach Abschalten des Spulenstromes beibehalten werden. Es ist somit keine permanente Energiezufuhr erforderlich.
- Durch die Kombination eines ersten Magnetkreises (mit Spule und veränderlichem Permanentmagneten) mit mindestens einem weiteren Magnetkreis (zweiter oder zusätzlich auch noch dritter Magnetkreis mit einem bzw. mit jeweils einem nicht-veränderlichen Permanentmagneten) können sich die Magnetflüsse beider Magnetkreise (bzw. der drei Magnetkreise) in dem oder den aktiven MRF-Spalt(en) entweder verstärken oder abschwächen. Die Abschwächung ist hierbei bei geeigneter räumlicher Anordnung der einzelnen Elemente des Magnetkreissystems und bei geeigneter Ausbildung derselben idealerweise bis auf eine magnetische Flussdichte von 0 im Spalt möglich, was insbesondere durch eine gute Abstimmung der einzelnen Magnetkreise und der darin enthaltenen Komponenten (Permanentmagnete veränderlicher sowie nicht-veränderlicher Art und Spulen sowie gegebenenfalls darüber hinaus nicht-magnetische Einsätze, wie Magnetfeld-regulierende Einsätze oder magnetische Isolatoren) erreicht werden kann. Unter diesen Bedingungen ergibt sich einerseits eine MRF-Kupplung bzw. MRF-Bremse, deren übertragenes Drehmoment über einen sehr großen Bereich variiert werden kann und andererseits ein MRF-Dämpfer, dessen Dämpfungskraft über einen sehr großen Bereich variiert werden kann, wobei lediglich für den kurzen Zeitraum der Veränderung (Schaltvorgang) Energie zur Stromerzeugung in der Spule aufgewendet werden muss. So lange die Kupplung bzw. die Bremse einerseits oder der Dämpfer andererseits mit konstantem übertragbarem Drehmoment bzw. mit konstanter Dämpfungskraft betrieben wird, wird das Magnetfeld alleine durch die Permanentmagnete und damit ohne Energiezufuhr aufrechterhalten.
- Im Gegensatz zu bisherigen MRF-Kupplungen und MRF-Bremsen einerseits bzw. MRF-Dämpfern andererseits, kann damit mit dem beschriebenen System ein veränderliches übertragbares Drehmoment bzw. eine veränderliche Dämpfungskraft ohne kontinuierliche Energiezufuhr realisiert werden. Dies ist insbesondere bei Kupplungen von großer Bedeutung, da hier der eingekuppelte Zustand meist für längere Zeit beibehalten werden soll.

Hierzu enthält die erfindungsgemäße Drehmomentübertragungsvorrichtung bzw. Kraftübertragungsvorrichtung ein Magnetkreissystem, welches mindestens einen Elektromagneten, mindestens einen Permanentmagneten, dessen Magnetisierung durch die Spule des Elektromagneten verändert werden kann, und bevorzugt auch mindestens einen weiteren nicht-veränderlichen Permanentmagneten enthält. Als Material für einen Permanentmagneten mit unveränderlicher Magnetisierung kommt vorzugsweise Neodym-Eisen-Bor oder Samarium-Kobalt und als Material für einen Permanentmagneten mit veränderlicher Magnetisierung kommt vorzugsweise Aluminium-Nickel-Kobalt oder ein Ferrit-Material in Frage, da letztere eine hohe Sättigungsmagnetisierung und eine relativ geringe Koerzitivfeldstärke aufweisen.

In einer bevorzugten Ausführungsform enthält die Übertragungsvorrichtung mindestens zwei aktive MRF-Spalte, die vorzugsweise auch parallel zueinander angeordnet sind und die vorzugsweise auch eine Verbindung untereinander zur Übertragung der MRF von einem Spalt in den anderen Spalt bzw. zum entsprechenden MRF-Austausch aufweisen können.

In einer weiteren besonderen Ausführungsform enthält die MRF-Drehmomentübertragungsvorrichtung bzw. die MRF-Kraftübertragungsvorrichtung in einer symmetrischen Anordnung entlang einer Achse bzw. auf einer Achse (bei der Drehmomentübertragungsvorrichtung handelt es sich hierbei bevorzugt um die Rotationsachse), einen Elektromagneten, zwei Permanentmagnete mit unveränderlicher Magnetisierung, einen Permanentmagneten mit veränderlicher Magnetisierung und zwei aktive MRF-Spalte. Hierbei wird eine symmetrische Anordnung der Spule und der Permanentmagnete auf einer Achse bevorzugt, bei der sich die Spule und der Permanentmagnet mit veränderlicher Magnetisierung zwischen den beiden Permanentmagneten mit unveränderlicher Magnetisierung befinden (ganz allgemein wird somit eine symmetrische Anordnung der Spule oder der Spulen und der Permanentmagnete auf einer Achse bevorzugt).

Damit kann die magnetische Flussführung der Übertragungsvorrichtung aus drei Magnetkreisen aufgebaut werden (die zusammen das Magnetkreissystem ausbilden): In einem solchen Magnetkreissystem verläuft der durch die Spule des Elektromagneten und den Permanentmagneten mit veränderlicher Magnetisierung erzeugte magnetische Fluss im Wesentlichen durch die beiden aktiven MRF-Spalte (Übertragungsspalte) und nicht durch die Permanentmagnete mit unveränderlicher Magnetisierung, wodurch die Gefahr der Depolarisierung letzterer Permanentmagnete vermieden wird. Außerdem verläuft der magnetische Fluss jedes der beiden Permanentmagnete mit nicht-veränderlicher Magnetisierung nur durch jeweils einen der beiden aktiven MRF-Spalte, wodurch eine höhere magnetische Flussdichte erzeugt werden kann, als beim Durchfluss des Flusses eines Permanentmagneten durch beide aktiven MRF-Spalte.

Bei der vorliegenden Erfindung können die aktiven MR-Spalte bzw. Drehmomentübertragungsspalte entweder parallel zur Rotationsachse (axiales Design entsprechend der aus dem Stand der Technik bekannten Glockenkonfiguration) oder senkrecht zur Rotationsachse bzw. Drehachse angeordnet werden (radiales Design entsprechend der aus dem Stand der Technik bekannten Scheibenkonfiguration). Darüberhinaus können auch mehrere einzelne MR-Spalte parallel zueinander angeordnet werden, um durch die größere Scherfläche das übertragbare Drehmoment zu erhöhen (Lamellenanordnung der die Spalte begrenzenden Wände). Ist nachfolgend von einem Drehmomentübertragungsspalt die Rede, so wird hierunter sowohl das gesamte, durch die MRF gefüllte bzw. füllbare Volumen des Spaltes verstanden sowie auch die einzelnen (im wesentlichen parallel zueinander angeordneten) Spaltabschnitte. Was jeweils gemeint ist, erschließt sich dem Fachmann unmittelbar aus dem jeweiligen Zusammenhang.

Bei der Kraftübertragungsvorrichtung können die aktiven MRF-Spalte auch mit einer größeren Dicke bzw. mit einer größeren Spaltweite so ausgelegt werden, dass sich der mechanische Widerstand der Kraftübertragungsvorrichtung bei geringster Magnetfeldstärke (unveränderliche Permanentmagnete und durch Elektromagnet veränderlicher Permanentmagnet kompensieren sich optimal) verringert und damit der Schaltfaktor des Dämpfers (Dämpfungskraft bei maximaler Feldstärke im Verhältnis zur Dämpfungskraft bei minimaler Feldstärke) deutlich erhöht wird. Insbesondere sind hier Spaltdurchmesser bzw. Spaltdicken im mm-Bereich vorteilhaft.

Weitere Ausgestaltungen der erfindungsgemäßen Drehmomentübertragungsvorrichtung bestehen darin, dass als steuerbares Material anstatt der MRF ein magnetorheologisches Gel (MRG), ein magnetorheologisches Elastomer (MRE) oder ein magnetorheologischer Schaum (MRS) verwendet wird. Ein MRG ist ein Material, welches im Gegensatz zu einer MRF zwar weich, aber nicht flüssig ist. In Analogie zu einer MRF kann es irreversibel beliebig deformiert werden und sich im Magnetfeld analog zu einer MRF versteifen. Ein MRE ist ein vernetztes Material, welches daher eine vorgegebene Form aufweist, aus der es reversibel nur begrenzt deformiert werden kann. Ein MRS ist ein Elastomerschaum, dessen Poren mit einer MRF gefüllt sind. Wie MRE weist auch ein MRS eine vorgegebene Form auf, aus der es reversibel nur begrenzt deformiert werden kann.

Mögliche Anwendungen der erfindungsgemäßen Drehmomentübertragungsvorrichtung sind elektrisch steuerbare Kupplungen und Bremsen sowie Drehschwingungsdämpfer, bei denen das übertragene Drehmoment durch das Magnetfeld der Permanentmagnete ohne Energiezufuhr dauerhaft erzeugt wird. Durch einen kurzzeitigen Strom in der Spule des Elektromagneten kann die Magnetisierung der veränderlichen Permanentmagnete modifiziert und damit das übertragbare Drehmoment bleibend geändert werden. Mögliche Anwendungen der erfindungsgemäßen Kraftübertragungsvorrichtung sind elektrisch steuerbare Stoßdämpfer und Schwingungsdämpfer, bei denen die Dämpfungskraft durch das Magnetfeld der Permanentmagnete ohne Energiezufuhr dauerhaft erzeugt wird.

Durch den kurzzeitigen Strom in der Spule kann die Magnetisierung der veränderlichen Permanentmagnete modifiziert und damit die Dämpfungskraft bleibend geändert werden.

Weitere Anwendungen sind Feststell- oder Blockiervorrichtungen. Dabei wird das Blockierdrehmoment bzw. die Blockierkraft durch die Permanentmagnete ohne Energieeinsatz erzeugt und durch eine kurzzeitigen Spulenstrom aufgehoben. Hiermit lassen beispielsweise Sicherheitsschalter realisieren.

Darüber hinaus kann die erfindungsgemäße Kraftübertragungsvorrichtung oder die erfindungsgemäße Drehmomentübertragungsvorrichtung auch für haptische Geräte bzw. als Mensch-Maschine-Schnittstelle genutzt werden. Dabei wird ein für den Benutzer deutlich fühlbares Grunddrehmoment bzw. eine deutlich fühlbare Grundkraft durch die Permanentmagnete erzeugt und durch eine Veränderung der Magnetisierung der veränderlichen Permanentmagnete infolge eines kurzzeitigen Stromes in der Spule entweder abgeschwächt oder verstärkt.

Übertragungsvorrichtungen die nicht teil der Erfindung sind können insbesondere auch dadurch gekennzeichnet sein, dass
- der magnetische Isolator ein dreidimensionaler Festkörper aus mindestens einem nichtmagnetischen Material mit einer relativen Permeabilität von kleiner aus 2, bevorzugt von kleiner gleich 1.2 ist und/oder dass der magnetfeldregulierende Einsatz ein dreidimensionaler Festkörper mit einer relativen Permeabilität von kleiner gleich 10, bevorzugt von größer gleich 2 und kleiner gleich 10 ist, und/oder dadurch, dass ein luftgefülltes Volumen als nicht magnetischer Einsatz 5 vorhanden ist.
- sich der magnetische Fluss des ersten und des zweiten Magnetkreises des Magnetkreissystems der Übertragungsvorrichtung in zumindest einem Teil des mindestens einen Übertragungsspalts überlagert.
- mindestens ein nichtmagnetischer Einsatz im zweiten Magnetkreis und/oder im ersten Magnetkreis vorhanden ist.
- der Elektromagnet, der Permanentmagnet mit nicht-veränderlicher Magnetisierung und der Permanentmagnet mit veränderlicher Magnetisierung sowie gegebenenfalls auch mindestens ein nicht-magnetischer Einsatz räumlich so ausgebildet und positioniert sind, dass der durch den Elektromagneten und den Permanentmagneten mit veränderlicher Magnetisierung erzeugte zweite magnetische Fluss durch den zweiten Magnetkreis und vorzugsweise nicht durch den Permanentmagneten mit nicht-veränderlicher Magnetisierung führt und dass der durch den Permanentmagneten mit nicht-veränderlicher Magnetisierung erzeugte erste magnetische Fluss durch den ersten Magnetkreis führt, wobei der erste und der zweite magnetische Fluss zumindest durch einen Teil des Übertragungsspalts führen.

- eine Anordnung entlang einer Achse, bevorzugt eine symmetrische Anordnung entlang der Achse vorhanden ist, bei der der Elektromagnet samt dem bevorzugt konzentrisch innerhalb der Spule dieses Elektromagneten angeordneten Permanentmagneten mit veränderlicher Magnetisierung zwischen den beiden Permanentmagneten mit nicht veränderlicher Magnetisierung angeordnet ist, wobei bevorzugt drei Magnetkreise im Magnetkreissystem der Übertragungsvorrichtung ausbildbar sind und/oder ausgebildet sind: ein erster Magnetkreis, dem der erste Permanentmagnet mit nicht-veränderlicher Magnetisierung angehört, ein dritter Magnetkreis, dem der zweite Permanentmagnet mit nicht-veränderlicher Magnetisierung angehört und ein zwischen dem ersten und dem dritten Magnetkreis liegender zweiter Magnetkreis, dem der Elektromagnet und der Permanentmagnet mit veränderlicher Magnetisierung angehören.
- der Elektromagnet, die zwei Permanentagnete mit nicht-veränderlicher Magnetisierung, der Permanentmagnet mit veränderlicher Magnetisierung und die zwei Übertragungsspalte sowie gegebenenfalls mindestens ein nichtmagnetischer Einsatz räumlich so ausgebildet und positioniert sind, dass der durch den Elektromagnet und den Permanentmagnet mit veränderlicher Magnetisierung erzeugte magnetische Fluss durch beide Übertragungsspalte, jedoch durch keinen der Permanentmagnete mit nicht-veränderlicher Magnetisierung führt und/oder dass der durch einen der beiden Permanentmagnete mit nicht-veränderlicher Magnetisierung jeweils erzeugte magnetische Fluss nur durch genau einen der beiden Übertragungsspalte führt.

- mehrere, insbesondere im Wesentlichen parallel zueinander angeordnete Übertragungsspalte, welche bevorzugt auch eine Verbindung untereinander für das magnetorheologische Material aufweisen, vorhanden sind.
- das magnetorheologische Material eine magnetorheologische Flüssigkeit, ein magnetorheologisches Gel, ein magnetorheologisches Elastomer und/oder einen magnetorheologischen Schaum enthält und/oder daraus besteht.
- der Permanentmagnet mit nicht-veränderlicher Magnetisierung und der Elektromagnet in Rotationsrichtung gesehen beabstandet voneinander angeordnet sind.
- der Elektromagnet samt dem Permanentmagneten mit veränderlicher Magnetisierung und die beiden Permanentmagneten mit nicht-veränderlicher Magnetisierung entlang der Rotationsachse und bevorzugt auch rotationssymmetrisch um diese angeordnet sind.
- der Elektromagnet, der Permanentmagnet mit veränderlicher Magnetisierung und/oder der Permanentmagnet mit nicht-veränderlicher Magnetisierung entweder zentrisch auf der Rotationsachse oder radial beabstandet von der und radialsymmetrisch um die Rotationsachse (R) angeordnet ist/sind.
- mindestens einer der Übertragungsspalte im Wesentlichen parallel zur Rotationsachse angeordnet ist (Axial- oder Glockenkonfiguration) oder dass mindestens einer der Übertragungsspalte im wesentlichen senkrecht zur Rotationsachse angeordnet ist (Radial- oder Scheibenkonfiguration).
- der Elektromagnet, der Permanentmagnet mit nicht-veränderlicher Magnetisierung, der Permanentmagnet mit veränderlicher Magnetisierung, ein nichtmagnetischer Einsatz und/oder der Übertragungsspalt zumindest teilweise innerhalb eines der Vorrichtungsteile und/oder zumindest teilweise angrenzend an eines der Vorrichtungsteile angeordnet ist.
- die beiden Vorrichtungsteile zwei ineinander schiebbare und/oder geschobene und/oder zumindest teilweise konzentrisch ineinander anordenbare und/oder angeordnete Kolbenelemente enthalten oder daraus bestehen, die bevorzugt entlang einer gemeinsamen Längsachse translatorisch relativ zueinander bewegbar sind.
- der Übertragungsspalt zumindest teilweise zwischen den beiden Vorrichtungsteilen angeordnet ist und dass die beiden Vorrichtungsteile entweder so ausgebildet sind, dass sie in Form einer Scherbewegung aneinander vorbei bewegbar sind, oder so ausgebildet sind, dass sie in Form einer Quetschbewegung aufeinander zu und voneinander weg bewegbar sind.
- die Ausbildung als Dämpfvorrichtung, insbesondere als elektrisch ansteuerbare Dämpfungsvorrichtung und/oder als Aufpralldampfer, Stoßdämpfer oder Schwingungsdämpfer, Feststell- oder Blockiervorrichtung, Sicherheitsschalter, haptisches Gerät oder als Mensch-Maschine-Schnittstellenelement erfolgt.
- der magnetische Fluss im Übertragungsspalt mittels mindestens eines nichtmagnetischen Einsatzes voreingestellt wird.

Erfindungsgemäße Übertragungsverfahren können insbesondere dadurch gekennzeichnet sein, dass eine magnetorheologische Übertragungsvorrichtung wie vorbeschrieben verwendet wird.

Nachfolgend wird die vorliegende Erfindung an fünf Ausführungsbeispielen genauer dargestellt: Zunächst an zwei Drehmomentübertragungsvorrichtungen, dann an einer Kraftübertragungsvorrichtung, dann an einer Drehmoment- und einer Kraftübertragungsvorrichtung mit einem zweigeteilten Permanentmagnet mit veränderlicher Magnetisierung.
- Figur 1: zeigt eine erfindungsgemäße Drehmomentübertragungsvorrichtung in Form einer magnetorheologische Kupplung in Schnittansicht.
- Figur 2: zeigt die erfindungsgemäße magnetorheologische Kupplung der Figur 1 mit dem durch den Permanentmagneten mit nicht-veränderbarer Magnetisierung hervorgerufenen Magnetfeld.
- Figur 3: zeigt den Betrieb der erfindungsgemäßen magnetorheologische Kupplung aus Figur 1 unter Magnetfeldverstärkung mit dem Permanentmagnet mit veränderbarer Magnetisierung.
- Figur 4: zeigt die erfindungsgemäße magnetorheologische Kupplung der Figur 1 im Zustand der Abschwächung der Flussdichte durch Verpolen des Permanentmagneten mit veränderbarer Magnetisierung.
- Figur 5: zeigt den Drehmomentübertragungsspalt der erfindungsgemäßen Vorrichtung der Figur 1 in vergrößerter Ansicht.
- Figur 6: zeigt eine zweite erfindungsgemäße Drehmomentübertragungsvorrichtung in Form einer magnetorheologische Kupplung (symmetrische Vorrichtung) in Schnittansicht.
- Figur 7: zeigt schematisch den grundlegenden Aufbau der magnetorheologische Kupplung nach Figur 6.
- Figur 8: zeigt den Betrieb der erfindungsgemäßen magnetorheologische Kupplung aus Figur 6 mit dem durch die Permanentmagnete mit nicht-veränderbarer Magnetisierung hervorgerufenen Magnetfeld.
- Figur 9: zeigt den Betrieb der erfindungsgemäßen magnetorheologische Kupplung aus Figur 6 unter Magnetfeldverstärkung durch den Permanentmagnet mit veränderbarer Magnetisierung.
- Figur 10: zeigt die erfindungsgemäße magnetorheologische Kupplung der Figur 6 im Zustand der Abschwächung der Flussdichte durch Verpolen des Permanentmagneten mit veränderbarer Magnetisierung.
- Figuren 11 bis 15: zeigen eine erfindungsgemäße Kraftübertragungsvorrichtung in Form zweier ineinander einschiebbarer Kolbenelemente (Magnetoreologischer Dämpfer).
- Figur 16: zeigt eine erfindungsgemäße Drehmomentübertragungsvorrichtung mit zweigeteiltem Permanentmagnet mit veränderlicher Magnetisierung.
- Figur 17: zeigt eine erfindungsgemäße Kraftübertragungsvorrichtung entsprechend der in den Figuren 11 bis 15 gezeigten mit einem zweigeteilten Permanentmagnet mit veränderlicher Magnetisierung.

### Ausführungsbeispiel 1:

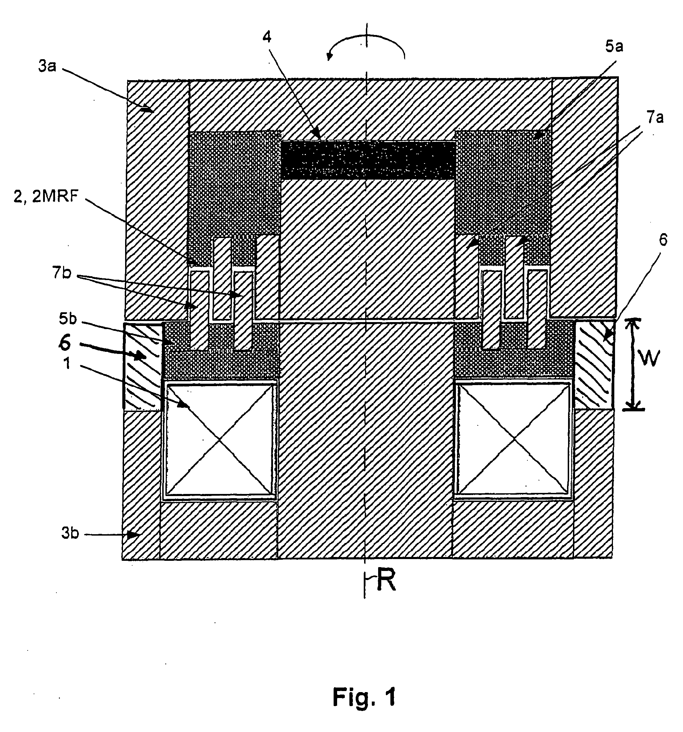

Figur 1 zeigt eine erfindungsgemäße magnetorheologische Kupplung in einer Schnittansicht durch die Rotationsachse R. Die gezeigte magnetorheologische Kupplung ist rotationssymmetrisch um die Rotationsachse R aufgebaut. Sie umfasst ein erstes Vorrichtungsteil bzw. Kupplungsteil 3a, 4, 5a, 7a sowie ein davon durch den Drehmomentübertragungsspalt 2, welcher mit einer MRF 2MRF gefüllt ist, getrenntes zweites Kupplungsteil 1, 3b, 5b, 6. Die beiden Kupplungsteile sind wie nachfolgend näher beschrieben aufgebaut. Beide Kupplungsteile sind hier um die Rotationsachse zentrisch angeordnet und um diese gegeneinander bzw. relativ zueinander rotierbar.

Das erste Kupplungsteil umfasst ein Gehäuse 3a aus ferromagnetischem Material. Dieses Gehäuse 3a umfasst den zentrisch auf der Rotationsachse R angeordneten Permanentmagneten 4. Dieser Permanentmagnet ist als Permanentmagnet mit nicht-veränderlicher Magnetisierung ausgebildet (dies gilt nachfolgend für alle Permanentmagnete mit den Bezugszeichen 4, 4a und 9b). Dieser ist hier in Axialrichtung bzw. Rotationsachsrichtung magnetisiert. Der Permanentmagnet 4 ist radial (also an seinem Außenumfang) von einem nicht-magnetischen Einsatz 5a, welcher ebenfalls vom Gehäuse 3a umschlossen wird, umgeben. Der nicht-magnetische Einsatz 5a ist hier als dreidimensionaler, fester Formkörper ausgeführt. Der nicht-magnetische Einsatz besteht hier aus einem mit Luft gefüllten Aluminiumhohlkörper (Gewichtsersparnis), er kann aber auch ganz aus Aluminium, jeglicher Art von Kunststoff und/oder aus Edelstahl bestehen oder diese Materialien oder beliebige Kombinationen davon aufweisen. Bei geeigneter konstruktiver Ausgestaltung (so dass z.B. die Halterung der Elemente 7a sichergestellt ist), kann der Einsatz auch ganz aus Luft bestehen.

Auf der dem zweiten Kupplungsteil zugewandten Seite sind in den Formkörper 5a mehrere Lamellen aus ferromagnetischem Material 7a integriert. Diese Lamellen 7a sind radial beabstandet von der Rotationsachse R zentrisch um diese angeordnet, aufgrund der Rotationssymmetrie der Anordnung somit als dünnwandige Hohlzylinder, deren Wände parallel zur Rotationsachse R verlaufen, ausgebildet. Diese Lamellen aus ferromagnetischem Material 7a bilden zusammen mit ihren Gegenstücken 7b (siehe nachfolgend) des zweiten Kupplungsteils aufgrund ihres reißverschlussförmigen Ineinandergreifens den mit der magnetorheologischen Flüssigkeit 2MRF gefüllten MR-Spalt bzw. Drehmomentübertragungsspalt 2 zwischen den beiden Kupplungsteilen aus. Der Drehmomentübertragungsspalt verläuft somit im gezeigten Schnitt durch die Rotationsachse gesehen mäanderförmig, wobei die aktiven MR-Spaltabschnitte (also diejenigen, in die die magnetischen Feldlinien aus den benachbarten Wandungen der ferromagnetischen Materialien 7a, 7b senkrecht eintreten) parallel zur Rotationsachse R verlaufen. Die magnetorheologische Kupplung ist somit in Glockenkonfiguration bzw. im axialen Design ausgebildet.

Das benachbart zum ersten Kupplungsteil auf der anderen Seite des MR-Spalts 2 angeordnete zweite Kupplungsteil weist ebenfalls ein Gehäuseteil 3b aus ferromagnetischem Material auf. In dieses Gehäuseteil 3b ist die Spule 1 des Elektromagneten radial beabstandet zur Rotationsachse R verlaufend eingebettet. Der Elektromagnet ist somit in Form eines im Querschnitt quaderförmigen Hohlzylinders, dessen Symmetrieachse mit der Rotationsachse zusammenfällt, angeordnet. Auf der spaltzugewandten Seite des zweiten Kupplungsteils sind angrenzend an die Spule 1 weitere nicht-magnetische Formkörper 5b aus demselben Material wie die Formkörper 5a des ersten Kupplungsteils angeordnet. In diese sind die vorbeschriebenen Lamellengegenstücke 7b aus ferromagnetischem Material eingebettet. Diese sind ebenso wie die Lamellenelemente 7a des ersten Kupplungsteils ausgebildet und so angeordnet, dass sie reißverschlussartig in die Lamellenanordnung 7a eingreifen. Auf der dem MRF-Spalt 2 zugewandten Seite weist das zweite Kupplungsteil umfangsseitig den radial beabstandet zur Rotationsachse R verlaufenden Permanentmagneten 6 mit veränderlicher Magnetisierung auf. Nachfolgend sind alle Permanentmagnete, die das Bezugszeichen 6 tragen, Permanentmagnete mit veränderlicher Magnetisierung.

Dieser Permanentmagnet 6 weist in Rotationsachsrichtung die Weite w auf. Der Permanentmagnet 6 läuft hier außenumfangsseitig vollständig geschlossen (in Form eines Rings) so um das zweite Kupplungsteil herum, dass der dem Spalt 2 zugewandte Teil des in Bezug auf die Achse R außenliegenden Jochabschnitts des Gehäuseteils 3b vollständig von dem Permanentmagnet 6 unterbrochen wird. Durch Wahl dieser Weite w kann die Einstellung des Arbeitspunkts der magnetorheologischen Kupplung beeinflusst werden.

Die Weite w stellt den stromlosen Arbeitspunkt, d.h. die ohne elektrischen Energieaufwand in der Spule erzeugte Magnetfeldstärke des nicht-veränderbaren Permanentmagneten 4 ein. Je kleiner die Weite w, desto niedriger liegt der stromlose Arbeitspunkt.

Gleichzeitig bestimmt die Weite w die Entmagnetisierungsbeständigkeit des veränderbaren Permanentmagneten 6. Je ausgedehnter der Permanentmagnet ist, desto schwieriger lässt er sich entmagnetisieren.

Im vorliegenden Fall stellt das zweite Kupplungsteil (das in der gezeigten Figur Untenliegende) die Antriebsseite dar. Rotiert diese, so überträgt sie, bei ausreichend hoher Magnetfeldstärke, bei der sich die MRF 2MRF im Spalt 2 versteift, ein Drehmoment auf die Abtriebsseite (erstes Kupplungsteil). Die genaue Funktionsweise der Drehmomentübertragung ist dem Fachmann hierbei bekannt. Ebenso ist dem Fachmann bekannt, dass die gezeigte Vorrichtung auch als Bremse ausgebildet sein kann bzw. verwendet werden kann. Die Kupplung/Bremse wird somit durch den Drehmomentübertragungsspalt 2 in zwei Teile geteilt, wobei je nach Betriebsmodus ein Teil ruht (Bremse) oder beide Teile mit unterschiedlichen Geschwindigkeiten um die Rotationsachse R rotieren (Kupplung).

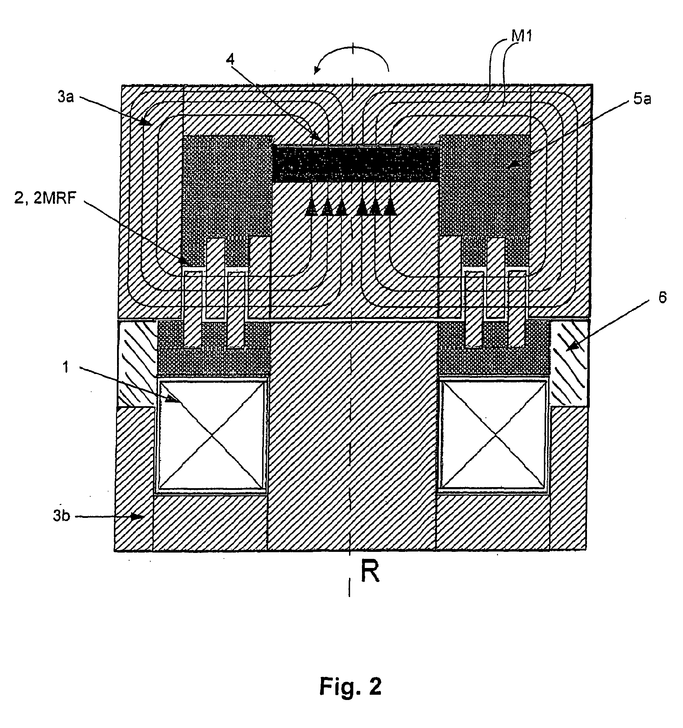

Figur 2 zeigt nun das Magnetkreissystem der erfindungsgemäßen magnetorheologischen Kupplung aus Figur 1 in dem Betriebsmodus nur mit dem Permanentmagneten 4 mit nicht-veränderbarer Magnetisierung, d.h. der Permanentmagnet mit veränderbarer Magnetisierung ist hier unmagnetisiert und durch die Spule fließt kein Strom. Nur im ersten Magnetkreis liegt in diesem Betriebsmodus ein magnetisches Feld vor (Feldlinien M1). Der erste Magnetkreis umfasst hierbei das ferromagnetische Gehäuse 3a des ersten Kupplungsteils, den Permanentmagneten 4, die Lamellenanordnung 7 sowie den von den Magnetfeldlinien des Permanentmagneten umschlossenen ersten Formkörper 5a bzw. überstreicht mit seinen geschlossenen Feldlinien diese Bauelemente oder umschließt sie. Im vorliegenden Fall ist der Formkörper 5a radial umfangsseitig des Permanentmagneten 4 angeordnet. In einer alternativen Variante können der Formkörper 5a und der Permanentmagnet 4 jedoch auch so ausgebildet sein, dass sich der nicht-magnetische Formkörper in diesem Permanentmagneten befindet bzw. von diesem umschlossen wird.

Durch die nicht-magnetische Glockenhalterung 5a und den veränderlichen Permanentmagneten 6 wird der durch den nicht-veränderbaren Permanentmagneten erzeugte magnetische Fluss 4, senkrecht durch die Glocken 7a und 7b und somit durch den mit 2MRF gefüllten Spalt 2 geleitet. Ein wesentlicher Vorteil dieser Anordnung ist es, dass durch den veränderlichen Permanentmagneten 6 kein bzw. nur sehr kurzzeitig Strom in der Spule benötigt wird, um den durch den nicht-veränderbaren Permanentmagneten 4 erzeugten magnetischen Fluss zu verstärken oder abzuschwächen.

Ein weiterer Vorteil ist es, dass der Permanentmagnet 4 durch die Trennung der beiden Magnetkreise (hier gezeigt erster Magnetkreis mit den Magnetfeldlinien M1, zweiter Magnetkreis siehe nachfolgend) nicht entgegen seiner Magnetisierungsrichtung durchflutet wird. Die Trennung der beiden Magnetkreise erfolgt hier dadurch, dass der Permanentmagnet 4 einerseits und die Spule 1 samt Permanentmagnet 6 andererseits in Drehachsrichtung R gesehen beabstandet zueinander und in den unterschiedlichen Kupplungsteilen angeordnet werden.

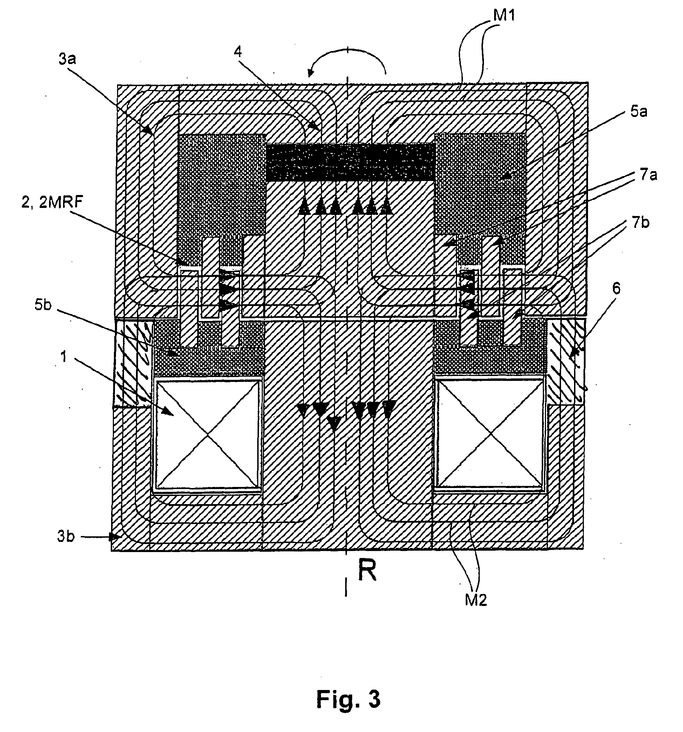

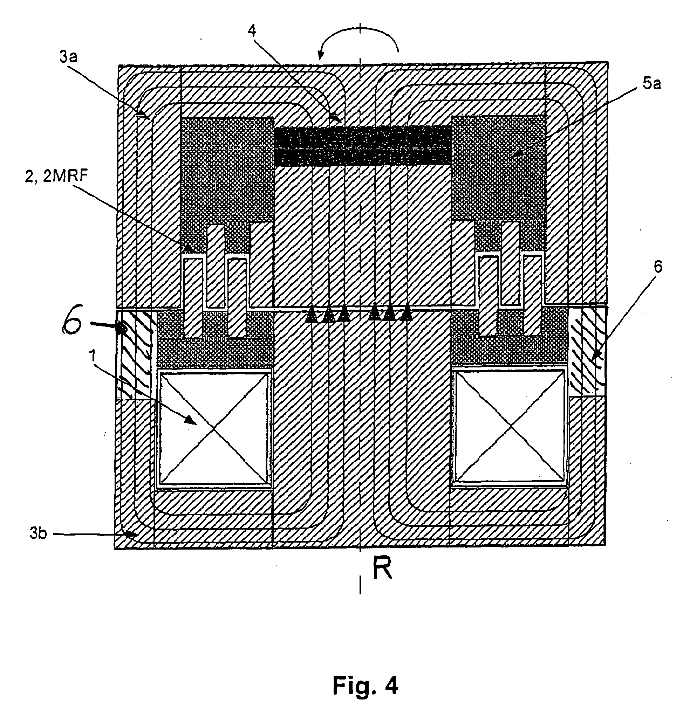

Figur 3 zeigt nun zusätzlich den zweiten Magnetkreis (Magnetfeldlinien M2), welcher durch die Spule 1, den veränderlichen Permanentmagneten 6, den Formkörper 5b, den Gehäuseabschnitt 3b des zweiten Kupplungsteils sowie die Lamellenanordnungen 7a und 7b ausgebildet wird bzw. welcher diese Elemente einschließt oder überstreicht. Durch Einschalten des Spulenstroms wird der Permanentmagnet 6 mit veränderlicher Magnetisierung aufmagnetisiert und das Magnetfeld lässt sich im MRF-Spalt erhöhen. Hierbei ist darauf zu achten, dass das Magnetfeld die richtige Orientierung besitzt, die Stromrichtung zum Aufmagnetisieren des veränderlichen Permanentmagneten 6 in der Spule 1 also so gewählt wird, dass sich im Bereich des Drehmomentübertragungsspalts 2 die Magnetfeldlinien M1 des ersten Magnetkreises und die Magnetfeldlinien M2 des zweiten Magnetkreises additiv überlagern. Ansonsten kommt es zu einer Abschwächung der Flussdichte im Drehmomentübertragungsspalt 2 (siehe Figur 4). Die Ausdehnung w des Permanentmagneten 6 ist so einzustellen, dass mit Hilfe des Elektromagneten (bei Stromrichtung im Elektromagnet bzw. in der Spule 1 wie gezeigt) eine Magnetisierung des veränderbaren Permanentmagneten 6 durch den Elektromagneten 1 bis zum Sättigungspunkt möglich ist. Gleichzeitig stellt die Weite w den stromlosen Arbeitspunkt des veränderbaren Permanentmagneten 6 ein.

Figur 4 zeigt den Magnetfeldlinienverlauf, wenn die Magnetisierung des veränderlichen Permanentmagneten 6 entgegengesetzt gewählt wird als in Figur 3 gezeigt (Verpolen des Permanentmagneten mit veränderlicher Magnetisierung).

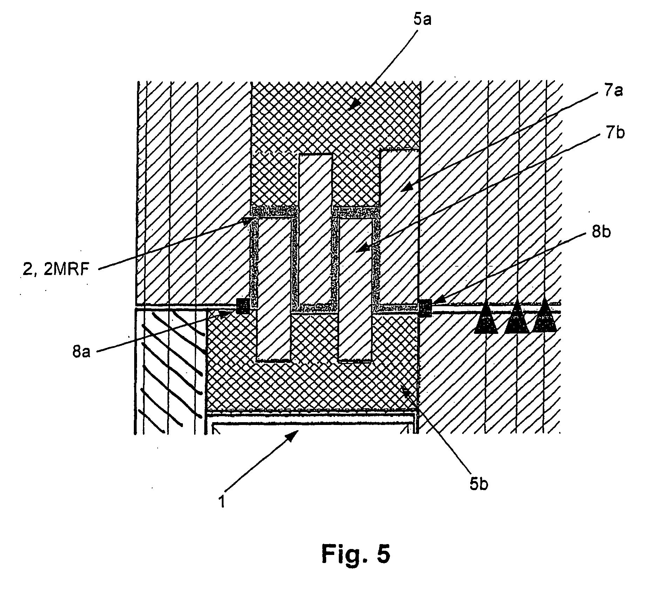

Figur 5 zeigt einen Ausschnitt des Drehmomentübertragungsspalts 2 der Figur 1 in Vergrößerung. Gut zu sehen ist der im Schnitt mäanderförmige Verlauf des Drehmomentübertragungsspalts 2, welcher durch die reißverschlussartig ineinandergreifenden Lamellenanordnungen 7a, 7b der beiden Kupplungsteile realisiert wird. Der Drehmomentübertragungsspalt 2 ist hier ganz mit der MRF 2MRF gefüllt (schattierte Bereiche). Um ein Auslaufen der MRF im Ruhezustand und/oder in der Rotation zu verhindern, ist der mit der MRF aufgefüllte Drehmomentübertragungsspaltabschnitt sowohl auf der der Drehachse R zugewandten Seite, als auch auf der gegenüberliegenden abgewandten Seite jeweils mit Dichtungselementen 8a, 8b versehen.

### Ausführungsbeispiel 2:

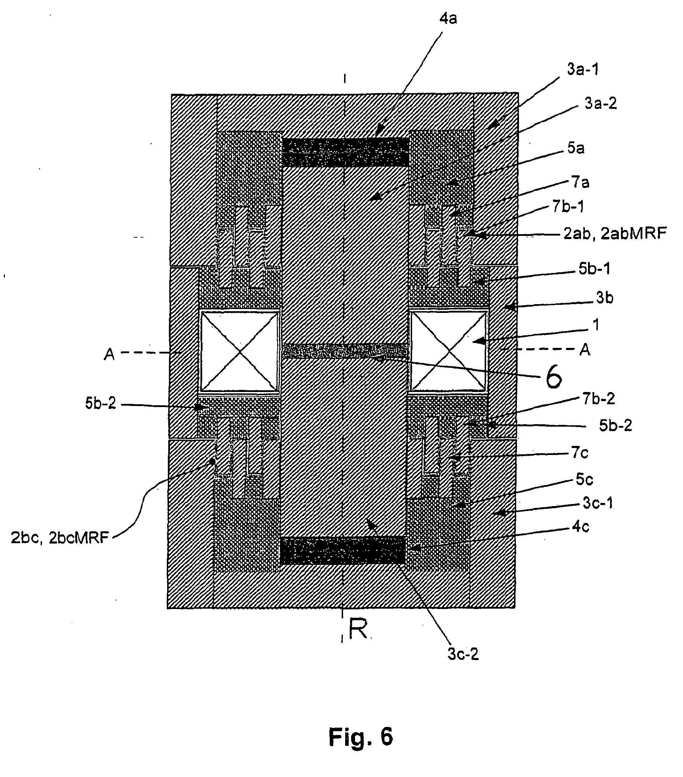

Figur 6 zeigt eine symmetrisch aufgebaute magnetorheologische Drehmomentübertragungsvorrichtung, welche einen Elektromagneten, konzentrisch innerhalb der Spule des Elektromagneten angeordnet einen veränderlichen Permanentmagneten und zwei nicht-veränderliche Permanentmagnete aufweist. Mit symmetrisch ist hier gemeint, dass die gezeigte Vorrichtung nicht nur symmetrisch um die Rotationsachse R ist, sondern auch spiegelsymmetrisch zur Ebene A-A, welche die Vorrichtung senkrecht zur Rotationsachse R auf halber Höhe durchschneidet.

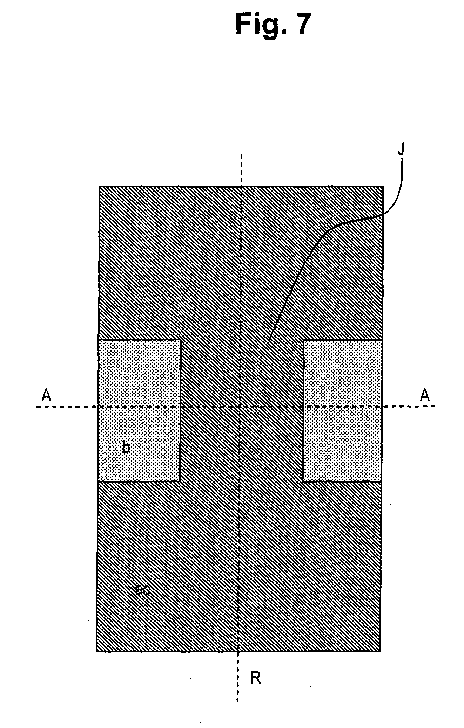

Das erste Vorrichtungsteil (nachfolgend auch als Außenteil bezeichnet) ist im gezeigten Schnitt doppelT-förmig (siehe auch Fig. 7) und besteht aus einem oberen Außenteil und einem unteren Außenteil. Das obere Außenteil weist die nachfolgend noch näher beschriebenen Elemente 3a-1, 3a-2, 4a, 5a, 7a sowie den oberhalb der Ebene A-A liegenden Abschnitt des Elements 6 auf. Das untere Außenteil des Außenteil weist die nachfolgend ebenfalls noch näher beschriebenen Elemente 3c-1, 3c-2, 4c, 5c, 7c und den unterhalb der Ebene A-A liegenden Abschnitt des Elements 6 auf.

Im gezeigten Fall stellt das Außenteil die Abtriebsseite dar, das nachfolgend noch näher beschriebene Mittelteil ist dann als Antriebs-Vorrichtungsteil ausgestaltet (Kupplung). Es ist jedoch auch möglich, das Außenteil als Antriebsseite zu betreiben und das Mittelteil als Abtriebsseite. Im Falle der Ausgestaltung als Bremse ist es möglich, das Außenteil als abzubremsendes Vorrichtungsteil (festgebremst) zu betreiben und das Mittelteil als relativ zur Umgebung feststehend angeordneter Teil. Auch ein umgekehrter Betrieb ist möglich.

Wie auch Figur 7 schematisch zeigt, unterteilt sich somit die gezeigte magnetorheologische Drehmomentübertragungsvorrichtung (Kupplung oder Bremse) in zwei Vorrichtungsteile, das Außenteil ac und das Mittelteil b. Das Mittelteil b ist hierbei wie nachfolgend noch näher beschrieben durch den MRF-Spalt und ggf. weitere Spaltabschnitte (in denen die beiden Teile b und ac formschlüssig aneinander angrenzen, jedoch nicht miteinander verbunden sind) vom Außenteil ac getrennt und relativ zu diesem um die Rotationsachse R rotierbar. Das Mittelteil b ist außenumfangsseitig des Jochabschnitts J des doppel-T-förmigen Außenteils beabstandet von der Rotationsachse R angeordnet.

Der obere Abschnitt des Außenteils (bzw. das obere Außenteil) weist einen ersten ferromagnetischen Gehäuseabschnitt 3a-1 auf, welcher wie der in Figur 1 gezeigte Gehäuseabschnitt 3a das obere Außenteil außenseitig abschließt. Darin sind (wie bereits im in Figur 1 gezeigten Fall) der nicht-magnetische Einsatz 5a, der Permanentmagnet 4a sowie die Lamellenanordnung 7a angeordnet. Der Jochabschnitt J des oberen Außenteils wird durch ein weiteres ferromagnetisches Gehäuseteil 3a-2 ausgebildet, welches sich entlang der Achse R von der Unterseite des Permanentmagneten 4a bis angrenzend an den veränderlichen Permanentmagneten 6 erstreckt. Der Permanentmagnet 6 ist spiegelsymmetrisch zur Ebene A-A angeordnet, also so, dass seine dem oberen Außenteil zugeordnete obere Hälfte oberhalb der Ebene A-A liegt und seine untere, dem unteren Außenteil zugeordnete Hälfte unterhalb dieser Ebene A-A liegt. Der ferromagnetische Gehäuseteil 3a-2 ist somit konzentrisch um die Rotationsachse R innerhalb des nicht-magnetischen Einsatzes 5a und der Lamellenanordnung 7a angeordnet.

Das untere Außenteil ist ebenso wie das obere Außenteil aufgebaut (ferromagnetische Gehäuseteile 3c-1 und 3c-2, Permanentmagnet 4c, nicht-magnetischer Einsatz 5c sowie Lamellenanordnung 7c und unterer Abschnitt des Elements 6), jedoch unterhalb der Ebene A-A spiegelsymmetrisch zum oberen Außenteil angeordnet.

Das relativ zum Außenteil um die Drehachse R rotierbare Mittelteil weist außenumfangsseitig den Gehäuseabschnitt 3b aus einem ferromagnetischen Material in Form eines beabstandet von der Rotationsachse R umlaufenden Hohlzylinders auf. Innerhalb dieses Wandabschnitts 3b und außerhalb des Jochabschnitts J des Außenteils ist spiegelsymmetrisch zur Ebene A-A und somit auf Höhe des veränderlichen Permanentmagneten 6 die Spule 1 des Elektromagneten angeordnet. Oberhalb der Spule 1 und somit beabstandet von der Ebene A-A ist der nicht-magnetische Einsatz 5b-1, in welchem die Lamellenanordnung 7b-1 angeordnet ist, positioniert. Auf der gegenüberliegenden, dem unteren Außenteil zugewandten Seite ist dementsprechend beabstandet von der Ebene A-A der nicht-magnetische Einsatz 5b-2, in dem die Lamellenanordnung 7b-2 eingreifend angeordnet ist, untergebracht. Wie dies bereits zur Figur 1 beschrieben wurde, greifen die Lamellenabschnitte 7b-1 reißverschlussartig in die Lamellenabschnitte 7a des oberen Außenteils ein. Dasselbe gilt für den Eingriff der Lamellenabschnitte 7b-2 in die Lamellenabschnitte 7c des unteren Außenteils.

Zwischen den Lamellenabschnitten 7a und 7b-1 verläuft mäanderförmig der erste Drehmomentübertragungsspalt 2ab zwischen dem oberen Außenteil und dem Mittelteil. Ebenso verläuft zwischen dem unteren Außenteil und dem Mittelteil der zweite Drehmomentübertragungsspalt 2bc mäanderförmig zwischen den Lamellenanordnungen 7b-2 und 7c. Der erste Drehmomentübertragungsspalt ist mit einer magnetorheologischen Flüssigkeit 2abMRF gefüllt, der zweite entsprechend mit der MRF 2bcMRF. Die beiden MRF-Spalte 2ab und 2bc weisen hier eine (nicht gezeigte) Verbindung auf, so dass ein gemeinsames Befüllen dieser Spalte mit der MRF möglich ist.

Die in Figur 6 gezeigte Drehmomentübertragungsvorrichtung stellt somit eine symmetrisch modifizierte Version der in Figur 1 gezeigten Drehmomentübertragungsvorrichtung dar. Ein wesentlicher Vorteil dieser Anordnung ist die doppelte Anzahl an MRF-Spalten (zwei Spalte 2ab und 2bc) und die Hinzufügung eines weiteren nicht-veränderlichen Permanentmagneten (zwei nicht-veränderliche Permanentmagnete 4a und 4c) sowie die Verlagerung des veränderlichen Permanentmagneten 6 in die Mitte des Jochabschnitts J (in Bezug auf die Ebene A-A gesehen). Die beiden nicht-veränderlichen Permanentmagnete 4 weisen hier notwendigerweise die gleiche axiale Magnetisierungsrichtung (parallel zur Rotationsachsrichtung R) auf, hier beispielsweise nach oben, also vom unteren Außenteil zum oberen Außenteil hin gerichtet. Dies ist notwendig, da die beiden Permanentmagnete 4 sich sonst gegenseitig schwächen würden. Damit der Feldlinienverlauf wie gewünscht möglich ist, sitzt der Permanentmagnet 6 zwischen den beiden Permanentmagneten 4a und 4b und ist dabei, von der Achse R aus gesehen, innerhalb der Spule 1 angeordnet (Spuleninnendurchmesser gleich Außendurchmesser des Permanentmagneten 6: Der innere Jochabschnitt des Gehäuses 3 wird somit vollständig und symmetrisch durch den Permanentmagneten 6 unterbrochen bzw. auf die beiden Teile 3a-2 und 3c-2 aufgeteilt). In Rotationsachsrichtung R gesehen sind die folgenden Elemente somit entlang der Rotationsachse R und symmetrisch um diese angeordnet: Permanentmagnet 4a, Spule 1 samt zugehörigem veränderlichen Permanentmagnet 6 und Permanentmagnet 4b. Durch die Dicke dieses Permanentmagneten 6 in Richtung der Achse R (also senkrecht zur Ebene A-A) ist der magnetische Arbeitspunkt der Drehmomentübertragungsvorrichtung auf gewünschte Art und Weise einstellbar.

Nur durch eine gleiche Ausrichtung der magnetischen Orientierung beider Permanentmagnete 4a, 4c ist eine Verstärkung oder vollständige Abschwächung möglich. Wäre die magnetische Orientierung beider Permanentmagnete entgegengesetzt ausgerichtet, würde die magnetische Flussdichte in einem Spalt erhöht werden, wohingegen im anderen Spalt die Flussdichte abgeschwächt werden würde.

Ist die gezeigte Drehmomentübertragungsvorrichtung als Bremse ausgebildet, so ist eines der beiden Vorrichtungsteile starr angeordnet. Vorzugsweise ist dies das Mittelteil, da so die Spule 1 sich dauerhaft in einem bezogen auf die Umgebung unbewegten Zustand befindet. Ist die gezeigte Drehmomentübertragungsvorrichtung als Kupplung ausgebildet, so bildet ein Teil der Anordnung (vorzugsweise das Mittelteil) die Antriebsseite, der andere die Abtriebsseite. In beiden Fällen können die beiden Vorrichtungsteile relativ zueinander um die Rotationsachse R rotieren.

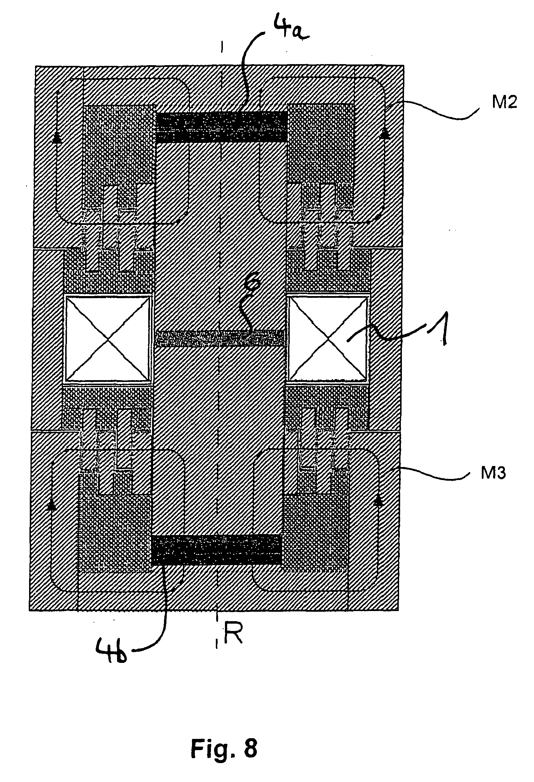

Figur 8 zeigt die Drehmomentübertragungsvorrichtung aus Figur 6 im Betriebsmodus, in dem lediglich durch die beiden nicht-veränderlichen Permanentmagneten 4a und 4c ein magnetischer Fluss erzeugt wird: In diesem Fall wird durch den Permanentmagneten 4a (Magnetfeldlinien M2) über die Elemente 3a-1, 3a-2, 5a, 7a und 7b-1 ein erster Magnetkreis ausgebildet, welcher ein Magnetfeld im Spalt 2ab in der magnetorheologischen Flüssigkeit 2abMRF erzeugt. Ebenso wird ein zweiter Magnetkreis (Magnetfeldlinien M3), welcher die Elemente 3c-1, 3c-2, 5c, 7b-2 und 7c umfasst und ein Magnetfeld im Spalt 2bc in der MRF 2bcMRF ausbildet durch den Permanentmagneten 4c ausgebildet. Die gezeigte Feldlinienrichtung ergibt sich dadurch, dass die beiden Permanentmagnete 4 die gleiche magnetische Orientierungsrichtung haben, um sich nicht gegenseitig zu schwächen bzw. zu entmagnetisieren. Im Gegensatz zur unsymmetrischen Variante (Figur 1) sitzt der veränderliche Permanentmagnet 6 in Bezug auf die Achse R gesehen innerhalb der Spule 1 und nicht (wie der entsprechende Luftspalt 6 in Figur 1) außen an der Spule.

Der Permanentmagnet 6 wird hier dazu verwendet die magnetische Flussdichte, welche durch die beiden nicht-veränderbaren Permanentmagnete 4a und 4b erzeugt wird, durch kurzzeitiges Aufmagnetisieren durch den Elektromagneten, zu erhöhen oder abzuschwächen. Die Trennung in drei Magnetkreise wird hier dadurch realisiert, dass der Permeabilität µ des veränderbaren Permanentmagneten 6 zwischen 1 und 15 liegt. Somit stellt der veränderbare Permanentmagnet 6 einen hohen magnetischen Widerstand dar. Dies hat den Vorteil, dass durch den hohen magnetischen Widerstand des veränderbaren Permanentmagneten 6 der magnetische Fluss gezwungen wird, sich über den MRF-Spalt 2ab und 2bc und die Glocken 7b1, 7b2 zu schließen. Eine Trennung der Magnetkreise hat den weiteren Vorteil, dass je ein nicht-veränderbarer Permanentmagnet 4a oder 4c nur eine Glockenkonfiguration 7b1 oder 7b2 durchflutet.

Die magnetische Flussdichte in den MRF-Spalt 2ab und 2bc ist dadurch höher. Der magnetische Schaltfaktor der Drehmomentübertragungsvorrichtung erhöht sich dadurch ebenfalls.

Die drei Permanentmagnete 4a, 4c und 6 erzeugen somit ein stromloses Grunddrehmoment. Zur besseren Übersichtlichkeit wurden hier in Figur 8 wie auch in den beiden nachfolgenden Figuren die Bezugszeichen der Bauelemente weggelassen.

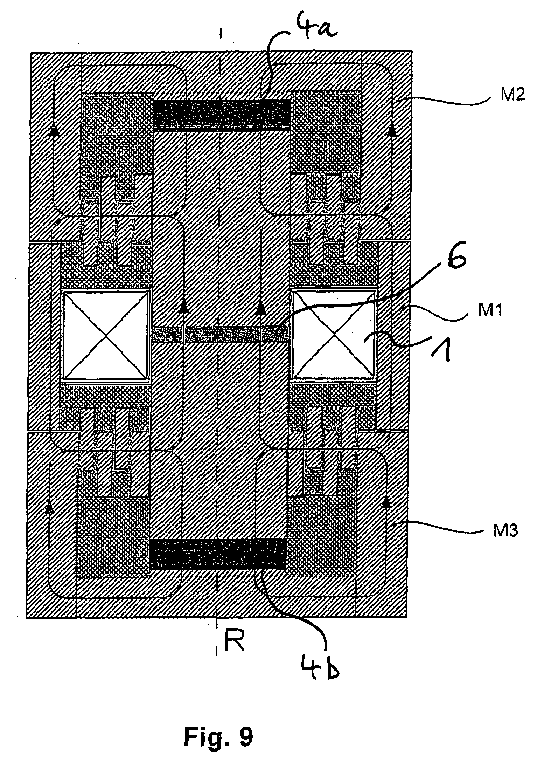

Figur 9 zeigt die Drehmomentübertragungsvorrichtung nach Figur 6 im Betriebsmodus der Verstärkung bei durch die Spule voll aufmagnetisiertem Permanentmagnet 6. In diesem Falle wird durch den Stromfluss in der Spule 1 und den Permanentmagnet 6 ein dritter Magnetkreis (Magnetfeldlinien M1) ausgebildet, welcher die Elemente 3b, 5b-1, 5b-2, 3a-2, 3c-2, 7a, 7b-1, 7b-2 und 7c umfasst und somit das von den nicht-veränderlichen Permanentmagneten 4 in den beiden Spalten erzeugte Magnetfeld additiv überlagert. Die Figur 9 zeigt somit die Drehmomentübertragungsvorrichtung im Verstärkungsmodus. Zu dem vorhandenen Magnetfeld durch die Permanentmagnete 4 addiert sich das Magnetfeld, welches durch die Spule und den Magneten 6 erzeugt wird. Diese Magnetfeldaddition funktioniert nur, wenn wie vorbeschrieben die beiden Permanentmagnete 4 die gleiche magnetische Vorzugsrichtung aufweisen, da sonst einer dieser Permanentmagnete verstärkt würde und der andere geschwächt würde, es also in Summe kaum eine Veränderung geben würde. Über die Dicke des Permanentmagneten 6 lässt sich der stromlose Arbeitspunkt der beiden unveränderbaren Permanentmagnete 4a bzw. 4b einstellen.

Eine genaue Auslegung des Mittelteils, insbesondere in Bezug auf das Element 6, ist also unerlässlich.

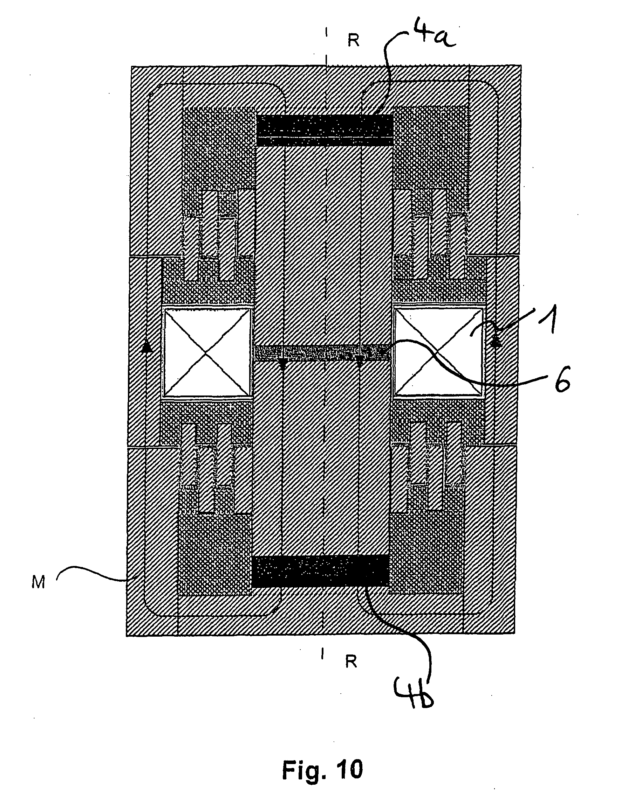

Figur 10 zeigt die Drehmomentübertragungsvorrichtung nach Figur 6 im Betriebsmodus der Abschwächung: Wird das Magnetfeld, welches durch den Permanentmagneten 6 mit veränderlicher Magnetisierung erzeugt wird, verpolt, so wird der magnetische Fluss (Magnetfeldlinien M), welcher durch die Permanentmagnete 4a und 4c erzeugt wird, aus den MRF-Spalten 2ab und 2bc herausgedrängt. Der magnetische Fluss schließt sich nun über das Außenjoch (Gehäuseteile 3a-1, 3b und 3c-1) der Anordnung. Wird der Magnet 6 in der Mitte zwischen der Spule 1 richtig ausgelegt, so ist eine vollständige Kompensation der magnetischen Flussdichte, erzeugt durch die beiden unveränderbaren Permanentmagnete 4a und 4b, möglich, wenn der veränderbare Permanentmagnet 6 durch den Elektromagnet bis zur Sättigung aufmagnetisiert wird.

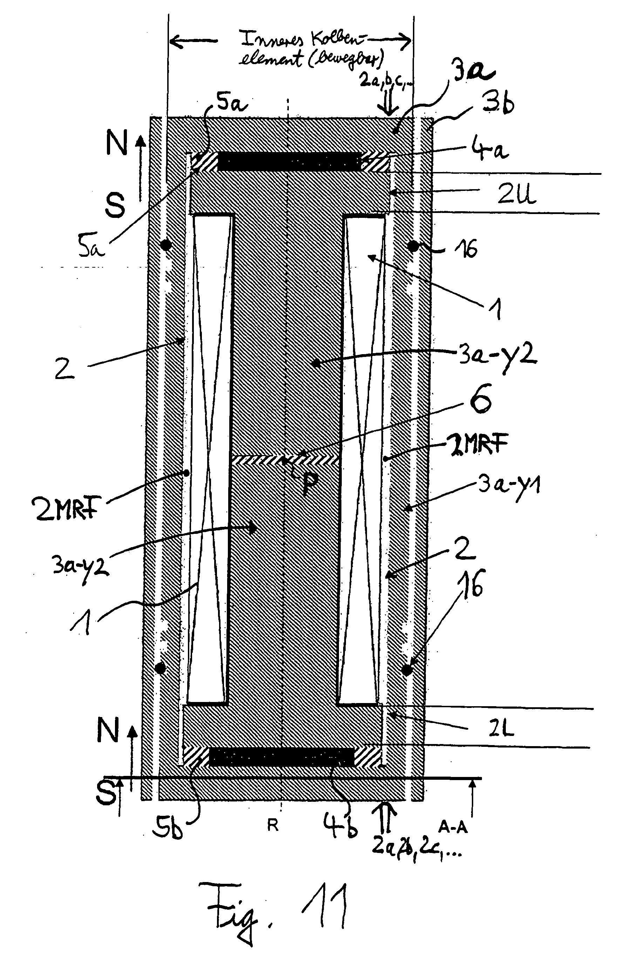

In den nun folgenden Figuren 11 bis 15 wird eine magnetorheologische Kraftübertragungsvorrichtung gemäß der vorliegenden Erfindung beschrieben.

Figur 11 zeigt einen Querschnitt (durch die zentrale Längsachse R der gezeigten Vorrichtung) einer magnetorheologischen Kraftübertragungsvorrichtung gemäß der vorliegenden Erfindung, die eine Dämpfungsvorrichtung darstellt.

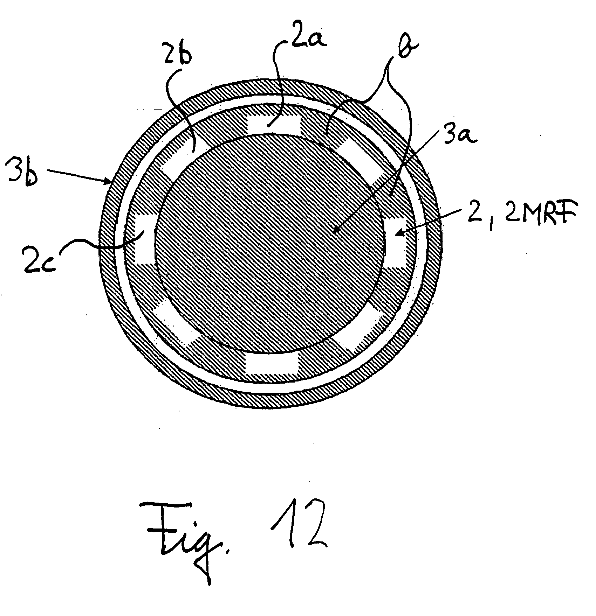

Figur 12 zeigt einen Querschnitt durch die gezeigte Vorrichtung entlang der Richtung A-A in Figur 11, d. h. senkrecht Symmetrieachse bzw. Längsachse R. Die gezeigte Dämpfungsvorrichtung umfasst zwei ineinander eingeschobene Kolbeneinheiten: Eine erste Kolbeneinheit 3a, die im Wesentlichen in Form eines Zylinders ausgebildet ist, die in eine zweite Kolbeneinheit 3b einschiebbar ist (hier in eingeschobenem Zustand gezeigt), die als ein Hohlzylinder, in welchen die erste Kolbeneinheit 3a entlang der Längssymmetrieachse R der gezeigten Vorrichtung eingeschoben werden kann, ausgebildet ist. Demgemäß sind die beiden Kolbeneinheiten so ausgebildet, dass sie relativ zueinander in einer translatorischen Bewegung entlang einer gemeinsamen Achse bewegt werden können, wobei die besagte Achse hier der gemeinsamen Längsachse R der beiden Kolbenelemente entspricht. Der Teil 3a ist demgemäß innerhalb des Teiles 3b gleitend verschiebbar. Beide Teile 3a und 3b sind durch ein ferromagnetisches Material ausgebildet, in diesem Falle Eisen.

Auf seinem Außenumfang umfasst der innere Kolben 3a einen äußeren Eisenjochteil 3a-y1 und sein innerer Abschnitt (d. h. der Abschnitt der im Bereich der zentralen Achse R und um diese zentrale Achse R herum innerhalb des äußeren Eisenjochbereiches 3a-y1 angeordnet ist) ist als innerer Eisenjochteil 3a-y2 ausgebildet. Die Spalte zwischen dem Teil 3a und dem Teil 3b weist in einem oberen Abschnitt und in einem unteren Abschnitt ringförmige Dichtelemente 16 auf, deren Durchmesser dem Außendurchmesser der inneren Kolbeneinheit 3a entspricht. Demgemäß sind die Teile 3a und 3b abdichtend ineinander eingeschoben. Indem eine Kraft auf den inneren Kolben 3a entlang der Richtung R angewandt wird, wird der innere Kolben 3a relativ zum äußeren 3b und entlang der Achse R auf eine Art und Weise verschoben, die später detaillierter beschrieben wird (d. h. auf eine Art und Weise, die von der Steifheit des magnetorheologischen Materials 2MRF abhängt).

Entlang der Zentralachse R gesehen umfasst der innere Kolben 3a drei unterschiedliche Abschnitte oder Bereiche, in denen drei unterschiedliche getrennte Magnetkreise ausgebildet sind (siehe nachfolgend): In einem ersten, zentralen Abschnitt entlang der Achse R ist in dem inneren Eisenjochteil 3a-y2 ein Permanentmagnet mit veränderbarer Magnetisierung (Permanentmagnet 6) ausgebildet. Dieser ist hier in Form einer flachen Scheibe ausgebildet, die senkrecht zu der Achse R angeordnet ist. Auf dem äußeren Umfang dieser Permanentmagnetscheibe 6 ist die Spule des Elektromagneten 1 angeordnet. Demgemäß entspricht der innere Radius des hohlzylinderförmigen Elektromagneten 1 (die Symmetrieachse des Hohlzylinders entspricht dabei der Achse R) dem Außenradius der Scheibe des veränderlichen Permanentmagneten 6, so dass der innere Jochteil 3a-y2 entlang der Achse R gesehen durch den Permanentmagneten 6 auf symmetrische Art und Weise vollständig in einen oberen Teil und in einen unteren Teil getrennt ist. Diese komplette Trennung des inneren Jochteils 3a-y2 ist ein wesentlicher Aspekt der vorliegenden Erfindung, da aufgrund dieser Trennung und der Anordnung des Permanentmagneten 6 die magnetischen Flusslinien wie folgt verlaufen:

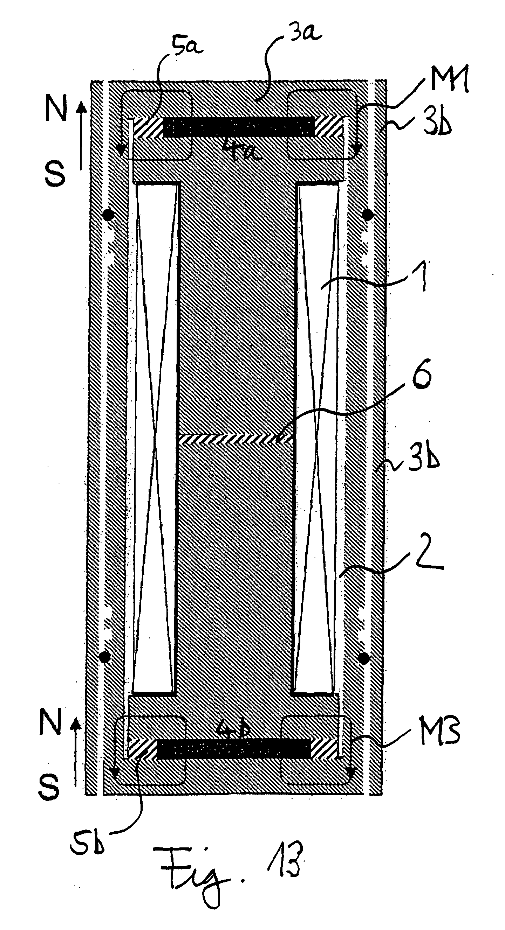

Die Flusslinien des Magnetkreises M1 und M3 verlaufen ausgehend von den Permanentmagneten 4a bzw. 4b über die Jochteile 3a und 3a-y1, über den MRF-Spalt 2U bzw. 2L und schließen sich somit über das Jochteil 3a-y2. Aufgrund des hohen magnetischen Widerstands des veränderbaren Permanentmagnetes 6 schließt sich der magnetische Fluss hervorgerufen durch die unveränderbaren Permanentmagneten 4a bzw. 4b nicht kurz und es kommt eine Magnetkreisausbildung wie in Figur 13 zustande.

Der Magnetkreis M2 bildet sich ausgehend von dem unveränderbaren Permanentmagneten 6 über das Jochteil 3a-y2, über die MRF-Spalte 2U und 2L, über das Jochteil 2a-y1 aus und schließt sich wieder über das Joch 3a-y2 zum unveränderbaren Permanentmagnet 6.

Demgemäß ist die Anordnung des Permanentmagneten 6 hier dergestalt, dass die magnetischen Flusslinien der beiden äußeren, nicht-veränderlichen Permanentmagneten 4a und 4b (siehe nachfolgende Beschreibung) nicht kurzgeschlossen sind.

Alternativ dazu kann, anstelle der Anordnung eines scheibenförmigen veränderlichen Permanentmagneten 6, der den inneren Jochteil 3a-y2 trennt, ein ringförmiger veränderlicher Permanentmagnet (nicht gezeigt) angeordnet werden, der den äußeren Jochteil 3a-y1 entlang der Achse R gesehen vollständig in symmetrische Teile teilt. Auch eine solche Anordnung realisiert eine komplette Trennung. Es muss der ferromagnetische Teil des Dämpfers nur einmal unterbrochen werden, um diese Trennung zu realisieren.

Demgemäß ist zumindest ein veränderlicher Permanentmagnet 6 entweder zentrisch (und vorzugsweise in Form einer Scheibe) auf der Achse R angeordnet oder konzentrisch vorzugsweise in Form eines flachen Hohlzylinders, eines Torus oder eines Ringes, um diese Achse herum angeordnet.

Entlang der Achse R gesehen sind auf beiden Seiten des zentralen Elektromagneten 1 zwei nicht-veränderliche Permanentmagneten 4a und 4b angeordnet: Ein erster Permanentmagnet 4a mit nicht-veränderlicher Magnetisierung in Form einer flachen Scheibe, der in dem oberen Abschnitt des Kolbens 3a angeordnet ist, nahe des oberen Endes besagten Kolbens, wobei diese Scheibe um die Achse R zentriert und senkrecht zu dieser Achse angeordnet ist, und ein zweiter Permanentmagnet 4b mit nicht-veränderlicher Magnetisierung, der wie der erste Permanentmagnet 4a ausgeformt ist und der senkrecht zu der Achse R an dem unteren Endabschnitt des Kolbens 3a angeordnet ist. Jeder der Permanentmagneten 4a und 4b wird durch einen nicht magnetischen Einsatz umgeben, der aus Aluminium ausgebildet ist (flache Ringscheibe bzw. Hohlzylinder 5a und 5b). Jeder dieser nicht magnetischen Einsätze 5a und 5b ist als flacher Ring ausgebildet, dessen Innendurchmesser dem Außendurchmesser des dazugehörigen Permanentmagneten 4a bzw. 4b entspricht. Jeder Permanentmagnet 4a, 4b ist (gesehen entlang der Achse R) auf derselben Höhe angeordnet, wie sein zugehöriger nicht magnetischer Einsatz 5a, 5b. Die Permanentmagneten 4a, 4b sind hier aus NdFeB ausgebildet. Beide Permanentmagneten 4a, 4b sind so angeordnet, dass sich ihre magnetischen Flusslinien parallel zueinander ausbilden (d. h. identische Anordnung ihrer entsprechenden Nord-Süd-Orientierung NS).

Der gezeigte innere Kolben 3a ist mit einem MRF-Spalt 2 versehen, der sich entlang des gesamten Umfanges des inneren Kolbens 3a in einem radialen Abstand von der Achse R befindet, der ungefähr dem Außendurchmesser der nicht magnetischen Einsätze 5a und 5b oder dem Außendurchmesser des hohlzylinderförmigen Elektromagneten 1 entspricht. Der MRF-Spalt 2 erstreckt sich nahezu entlang der gesamten Länge des inneren Kolbens 3a (gesehen in Richtung der Achse R) mit Ausnahme des oberen Endabschnittes und des unteren Endabschnittes des inneren Kolbens (diese Abschnitte sind diejenigen, die sich, vom zentralen Punkt P der symmetrischen Anordnung gesehen, oberhalb der Elemente 4a/5a und unterhalb der Elemente 4b/5b erstrecken). In diesen äußeren Abschnitten ist der Kolben 3a, siehe Figur 12, mit einer Mehrzahl von Auslässen 2a, 2b, 2c, ... versehen, die mit dem MRF-Spalt 2 verbunden sind oder als Teil des letzteren ausgebildet sind und die über den gesamten Umfang des Kolbens 3a in einem Abstand von der Achse R angeordnet sind, der ungefähr dem Abstand des MRF-Spaltes 2 von der besagten Achse R entspricht. Demgemäß sind die Auslässe 2a, 2b ,2c, ... und der MRF-Spalt 2 entlang der Achse R so angeordnet, dass eine magnetoreologische Flüssigkeit 2 MRF durch die Kanäle 2, 2a, 2b, 2c, ... entlang der Achse R fließen kann. Der MRF-Spalt 2 ist im Wesentlichen parallel zu der gemeinsamen Längsachse der beiden Kolbeneinheiten 3a, 3b angeordnet.

Die nicht-magnetischen Einsätze 5a, 5b werden dazu verwendet, das durch die Permanentmagneten mit nicht-veränderlicher Magnetisierung 4a, 4b im Bereich der magnetorheologischen "Ventile" 2U bzw. 2L erzeugte Magnetfeld, zu erhöhen. Sie werden vorzugsweise so groß wie möglich ausgebildet, um die Ausbildung des magnetischen Feldes durch die nicht-veränderlichen Permanentmagnete 4a, 4b zu unterstützen und um einen magnetischen Kurzschluss der Feldlinien dieser Magnete zu unterbinden. Aufgrund der gezeigten symmetrischen Anordnung wird, unter der Annahme, dass die Länge der Ventile 2U/2L dieselbe ist, das Spulenfeld des Elektromagneten 1 durch das Design der nicht-magnetischen Einsätze 5a, 5b nicht modifiziert.

Die Form und die Anordnung des Permanentmagneten 6 mit veränderbarer Magnetisierung ist ein Kompromiss und realisiert die Idee der vorliegenden Erfindung: Für eine gegebene Anzahl von Spulenwicklungen in der Spule des Elektromagneten 1
- bewirkt ein Vergrößern der Dicke des Permanentmagneten 6 (in Richtung der Achse R gesehen), dass der magnetische Widerstand des Magnetkreises M2 und somit die Flussdichte erzeugt durch die Permanentmagnete 4a und 4b mit unveränderbarer Magnetisierung im MRF-Spalt 2L bzw. 2U steigt.
- bewirkt ein Verringern der Dicke des Permanentmagneten 6 entlang der Achse R gesehen, dass der magnetische Widerstand des Magnetkreises M2 und somit die Flussdichte erzeugt durch die Permanentmagnete 4a und 4b mit unveränderbarer Magnetisierung im Spalt 2L bzw. 2U sinkt.
   Generelle Erläuterung hierzu: Der veränderbare Permanentmagnet 6 stellt mit seiner niedrigen Permeabilität einen hohen magnetischen Widerstand im Magnetkreis M2 dar. Hierdurch wird die Trennung in 3 Magnetkreise erreicht.

Wie aus Figur 11 ersichtlich ist, ist die magnetoreologische Kraftübertragungsvorrichtung bezüglich einer Ebene durch den Punkt P senkrecht zur Achse R eine spiegelsymmetrische Anordnung und bezüglich der Achse R nahezu eine rotationssymmetrische Anordnung um die Achse R (rotationssymmetrisch mit Ausnahme der Elemente 2a, 2b, 2c, ...).

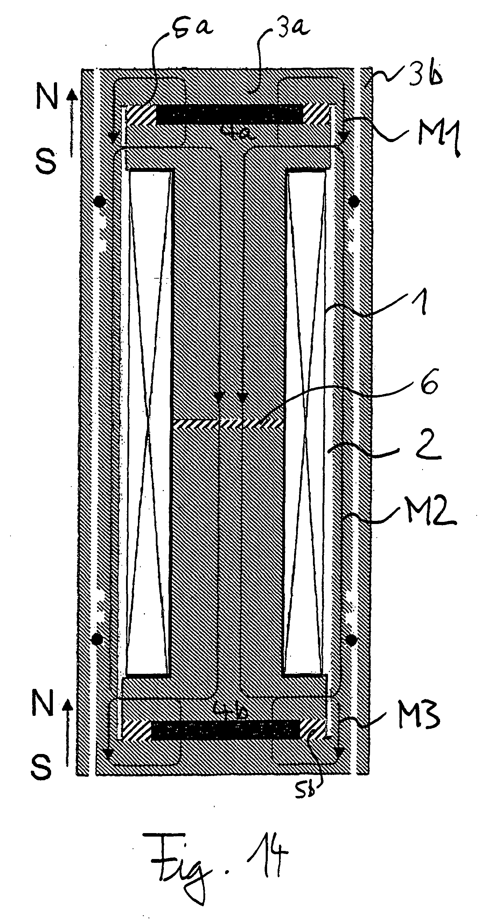

Werden demnach die Kanalabschnitte 2, 2a, 2b, 2c, ... mit der magnetoreologischen Flüssigkeit 2 MRF gefüllt, bildet die Anordnung des oberen nicht-veränderlichen Permanentmagneten 4a zusammen mit seinem zugehörigen nicht-magnetischen Einsatz 5a und zusammen mit dem entsprechenden oberen aktiven MRF-Spaltteil 2U ein erstes, oberes MRF-Ventil, wohingegen die unten liegende Anordnung der Elemente 4b, 5b zusammen mit dem entsprechenden unteren, aktiven Teil 2L des MRF-Spaltes ein zweites, unten liegendes MRF-Ventil ausbildet. Demgemäß resultiert, aufgrund des magnetischen Flusses in diesen Ventilen, der durch die Permanentmagneten 4 ausgebildet wird, eine bestimmte Grundversteifung der MRF in den entsprechenden Abschnitten 2U, 2L des MRF-Spaltes 2, was in einer Basisdämpfung der gezeigten Anordnung auch in dem Falle resultiert, dass kein Strom durch die Spule des Elektromagneten 1 fließt. Wählt man die Stromrichtung durch die Spule des Elektromagneten 1 entsprechend, so kann durch Erhöhen dieses Stromes der magnetische Fluss durch die aktiven Teil 2U, 2L des MRF-Spaltes 2 erhöht werden, wodurch die Dämpfung der gesamten Anordnung erhöht wird (siehe Figur 14).

Wie aus den Figuren 13 bis 15 ersichtlich ist, werden sämtliche erzeugte Magnetkreise in dem bewegbaren inneren Kolben 3a ausgebildet (maximal werden drei Magnetkreise durch die zwei Permanentmagneten 4 mit nicht-veränderlicher Magnetisierung, den Elektromagneten 1 und den Permanentmagneten 6 mit veränderlicher Magnetisierung ausgebildet, vergleiche Figur 14). Der äußere Kolben 3b (äußere Hülle) dient lediglich als Gehäuse und als Führung für den inneren Kolben 3a. Die Auslässe 2a, 2b, 2c, ... werden als Aushöhlungen bzw. -kerbungen in dem oberen bzw. dem unteren Jochabschnitt des Kolbens 3a ausgebildet. Aufgrund dieser Ausformung wird der Magnetkreis kaum unterbrochen und der magnetische Fluss wird nur durch die Balken b, die zwischen zwei benachbarten Auskerbungen 2a, 2b, ... ausgebildet sind, komprimiert.

Wenn der innere Kolben 3a aufwärts oder abwärts entlang der Achse R bewegt wird, fließt MRF durch die Einlässe/Auslässe 2a, 2b, 2c, ... durch beide MRF-Ventile und von der oberen Seite zu der unteren Seite oder von der unteren Seite zu der oberen Seite des inneren Kolbens 3a und strömt somit durch besagten Kolben. Durch die gezeigte Geometrie ist sichergestellt, dass die Einlässe/Auslässe praktisch frei von einem magnetischen Feld sind (der Fluss des MRF-Stromes wird, indem der Durchmesser des MRF-Spaltes 2 entlang der Ausdehnung des Elektromagneten 1 erhöht wird, ausgedehnt, um einen höheren Schaltfaktor zwischen magnetoreologischem und fluidhydraulischem Druckverlust zu erzielen (Verhältnis der Druckverluste mit dem und ohne das magnetische Feld)). Die innere Kolbeneinheit 3a ist mit aus dem Stand der Technik bekannten Dichtungen 16 gegen die äußere Hülle versiegelt, so dass ein Bypass-Spalt. ä. im vorliegenden Fall verhindert wird.

Es ist wichtig, dass die beiden Permanentmagneten 4a und 4b mit nicht-veränderlicher Magnetisierung dieselbe magnetische Orientierung N-S aufweisen. Ansonsten würde, bei Aufmagnetisierung des veränderbaren Permanentmagneten 6 (Strom fließt kurzzeitig in der Spule) der magnetische Fluss in einem aktiven MRF-Spalt (beispielsweise 2U) erhöht werden, wohingegen der magnetische Fluss in dem anderen aktiven MRF-Spalt (beispielsweise 2L) erniedrigt werden würde, so dass im Wesentlichen keine Änderung des Flusswiderstandes für die MRF 2MRF resultieren würde.

Indem die Permanentmagneten 4 und der Permanentmagnet 6 wie vorbeschrieben verwendet werden, ist es möglich, einen variabel vorwählbaren, grundlegenden Scherwiderstand der MRF ohne Aufwand von elektrischer Energie durch den Elektromagneten zu realisieren.

Durch Verwendung des Elektromagneten und/oder durch Einstellung des Permanentmagneten 6 mit veränderlicher Magnetisierung ist es möglich, die magnetischen Felder der Permanentmagneten 4a, 4b mit nicht-veränderlicher Magnetisierung bis auf fast Null abzuschwächen, so dass im Extremfall lediglich die fluidhydraulischen Eigenschaften der MRF ohne magnetisches Feld relevant werden. Andererseits ist es auch möglich, das Feld der Permanentmagneten 4a, 4b mit nicht-veränderlicher Magnetisierung auf diese Art und Weise so zu erhöhen, dass sehr hohe Scherwiderstandswerte erreicht werden können. Aufgrund des durch die Permanentmagneten 4 und 6 eingestellten, grundlegenden Scherwiderstandes kann ein gewünschtes Fail-Safe-Verhalten der gezeigten Vorrichtung sichergestellt werden.

Figur 13 zeigt den ersten Magnetkreis (magnetische Flusslinien M1) des vorbeschriebenen Systems, der den Permanentmagneten 4a mit nicht-veränderlicher Magnetisierung, den nicht magnetischen Einsatz 5a, denjenigen Teil des MRF-Spaltes 2, der dem oberen magnetischen Ventil 2U entspricht, und die Teile des inneren Jochteils 3a-y2, des äußeren Jochteils 3a-y1 sowie des oberen Deckels des inneren Kolbens 3a, die die Elemente 4a, 5a umgeben, umfasst. Ebenso ist der dritte Magnetkreis (magnetische Flusslinien M3) gezeigt, der die entsprechenden Teile am unteren Ende des Kolbens 1a umfasst: Elemente 4b, 5b ebenso wie die Teile der Elemente 3a-y2, 3a-y1 und des unteren Deckels des Kolbens 3a, die die Elemente 4b, 5b umgeben.

Wie man in Figur 13 sieht, schließen die beiden nicht-veränderlichen Permanentmagneten 4a, 4b ihre magnetischen Flusslinien ausschließlich durch den MRF-Spalt 2 (im Bereich der aktiven Teile 2U, 2L).

Zusätzlich zu dem ersten und dritten Magnetkreis M1, M3 wie sie in Figur 13 gezeigt sind, zeigt Figur 14 auch den zentralen magnetischen Kreis, den zweiten Magnetkreis (magnetische Flusslinien M2), der den Elektromagneten 1, den Permanentmagneten 6 mit veränderlicher Magnetisierung und diejenigen Teile des inneren Eisenjochabschnittes 3a-y2, des äußeren Jochabschnittes 3a-y1 und des MRF-Spaltes 2, die diese Elemente 1 und 6 umgeben, umfasst. In Figur 14 wird der Strom, der durch den Elektromagneten bzw. dessen Spule fließt, so ausgewählt, dass durch einen kurzzeitigen Stromstoß der veränderliche Permanentmagnet 6 auf eine Magnetisierung eingestellt wird, die magnetische Flussdichte, erzeugt durch die nicht-veränderbaren Permanentmagnete 4a und 4b, maximal verstärkt. Die Verstärkung wird durch die Stromstärke in der Spule eingestellt. Eine maximale Aufmagnetisierung wird bei Erreichen der Materialkonstanten Br (Sättigungsmagnetisierung) des veränderbaren Permanentmagneten 6 erreicht.

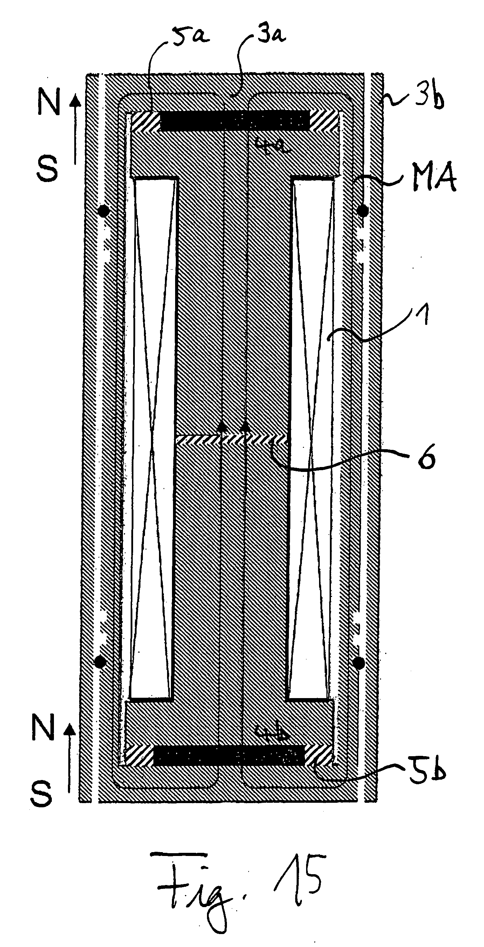

Im Gegensatz dazu wird in Figur 15 die Stromrichtung im Elektromagneten 1 umgedreht, so dass eine dem magnetischen Fluss, erzeugt durch die nicht-veränderbaren Permanentmagnete 4a und 4b, entgegengesetzte Magnetisierung entsteht. Beim Ent- bzw. Ummagnetisieren des veränderbaren Permanentmagneten 6 muss der Strom im Elektromagneten 1 so hoch sein, dass die Materialkonstante -_{J}H_{C} des veränderbaren Permanentmagneten 6 überschritten wird.

Mithilfe der nicht-magnetischen Einsätze 5a, 5b, die auf dem äußeren Umfang der Permanentmagneten 4a, 4b mit nicht-veränderlicher Magnetisierung ausgebildet sind, ist eine nahezu komplette Kompensation des Magnetfeldes innerhalb der MRF-Ventile 2U/2L möglich, da der magnetische Fluss innerhalb der MRF-Ventile auf eine nahezu homogene Art und Weise verteilt ist. So verbleibt in dem Abschwächungszustand, der in Figur 15 gezeigt ist, nahezu kein magnetischer Fluss innerhalb des MRF-Spaltes 2, der die aktiven MRF-Spalte 2U bzw. 2L umfasst, und das magnetische Feld der Permanentmagneten 4 mit nicht-veränderlicher Magnetisierung kann nahezu vollständig und auf homogen Art und Weise kompensiert werden.

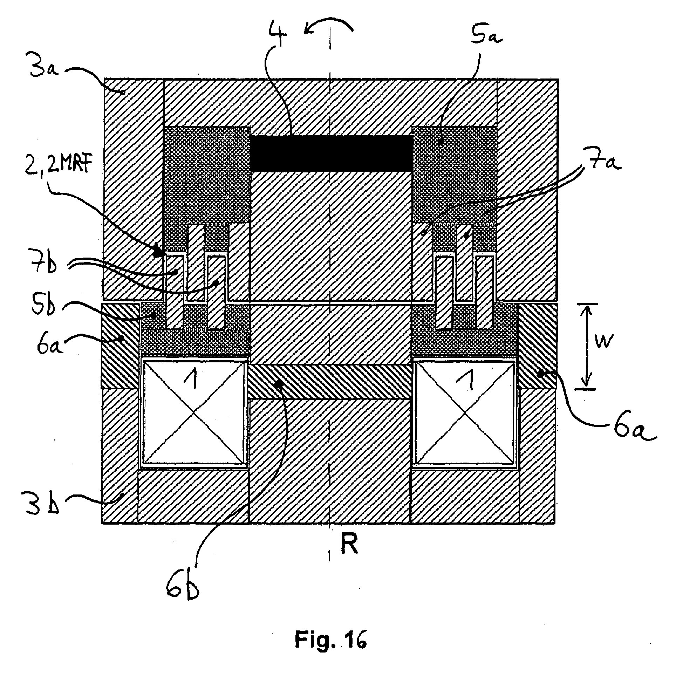

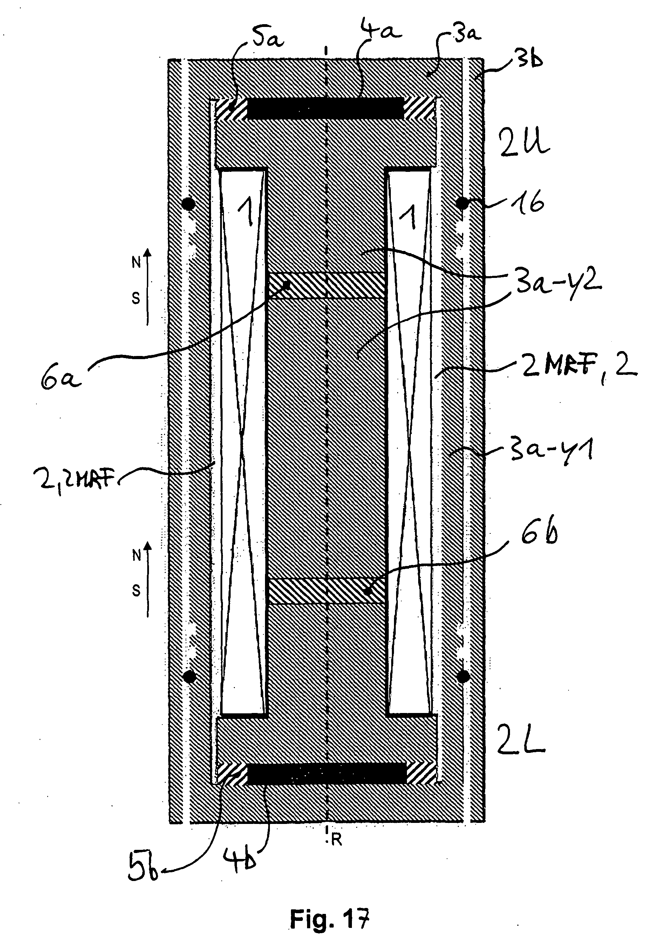

Nachfolgend werden noch zwei Ausführungsbeispiele (Drehmomentübertragungsvorrichtung, Figur 16, und Kraftübertragungsvorrichtung, Figur 17) beschrieben, bei denen zwei Permanentmagnete mit veränderlicher Magnetisierung 6a, 6b bzw. ein zweigeteilter Permanentmagnet 6a, 6b mit veränderlicher Magnetisierung vorgesehen ist, wobei die beiden Magnete bzw. Magnetteile durch ein magnetisch leitfähiges Material verbunden sind.

Die Ausführungsformen mit zwei Permanentmagneten 6a, 6b mit veränderlicher Magnetisierung haben den Vorteil, dass eine homogenere Flussdichteverteilung im magnetischen Joch stattfinden kann. Es kommt somit zu verringerten Sättigungseffekten im Joch und das vorhandene magnetische Material zur Flussführung kann effizienter genutzt werden.

Gleichzeitig kann so auf die Magnetfeldstärke, erzeugt durch die beiden veränderbaren Permanentmagneten 6a, 6b stark Einfluss genommen werden. Wird nämlich eine solche Zweiteilung vorgesehen, so wird dadurch das Volumen erhöht, es kann somit durch eine höhere Gesamt-Remanenzflussdichte eine höhere Flussdichte im MRF-Spalt erzeugt werden und/oder es können mehrere MRF-Spalte mit Magnetfeldlinien durchflutet werden.

Figur 16 zeigt eine weitere erfindungsgemäße magnetorheologische Drehmomentübertragungsvorrichtung in einer Schnittansicht durch die Rotationsachse R. Diese Drehmomentübertragungsvorrichtung ist grundsätzlich wie die in Figur 1 gezeigte Drehmomentübertragungsvorrichtung aufgebaut, so dass nachfolgend nur die Unterschiede beschrieben werden: Zusätzlich zu dem in Figur 1 gezeigten Permanentmagneten 6 mit veränderlicher Magnetisierung (der hier das Bezugszeichen 6a trägt) ist im zweiten, unteren Vorrichtungsteil konzentrisch innerhalb des Elektromagneten 1 ein zusätzlicher Permanentmagnetteil 6b mit veränderlicher Magnetisierung angeordnet. Dieser Teil 6b ist als flache kreisförmige Scheibe mit denselben Abmessungen wie der Permanentmagnet 4 mit nicht-veränderlicher Magnetisierung ausgebildet und konzentrisch um die Rotationsachse R angeordnet. Sein (senkrecht zur Rotationsachse R gesehen) äußerer Rand schließt bündig mit der Innenwand der Spule 1 des Elektromagneten ab, so dass der äußere Durchmesser des Permanentmagnetteils 6b dem Innendurchmesser der Spule 1 entspricht. Das innere Joch des zweiten Vorrichtungsteils ist somit durch den Permanentmagnetteil 6b in Richtung der Rotationsachse R gesehen in zwei Teile geteilt. Der außen sitzende Permanentmagnetteil 6a und der innen sitzende Permanentmagnetteil 6b sind über einen Abschnitt des ferromagnetischen Gehäuseteils 3b miteinander magnetisch gekoppelt.

Figur 16 zeigt somit eine Abwandlung des ersten Ausführungsbeispiels, bei dem eine Teilung des veränderlichen Permanentmagneten 6 in zwei Teile vorgesehen ist. Grundsätzlich kann der Permanentmagnet 6 auch in mehr als zwei Teile, die über magnetisch leitendes Material jeweils miteinander magnetisch gekoppelt sind, aufgetrennt werden. Die Teilung des veränderlichen Permanentmagneten 6 erfolgt hier somit in einem ersten Teil (ringförmigen Teil 6a) und in einen zweiten Teil (scheibenförmigen Teil 6b), wobei letzterer in dem mittleren Joch im Gehäuseabschnitt 3b sitzt. Beide veränderlichen Permanentmagnete 6a, 6b sind über das magnetisch leitende Material des Gehäuseabschnitts 3b verbunden. Die Magnetkreisausbildung unterscheidet sich nicht von der im ersten Ausführungsbeispiel aufgezeigten.

Figur 17 zeigt ein weiteres Ausführungsbeispiel einer erfindungsgemäßen Kraftübertragungsvorrichtung. Der grundsätzliche Aufbau ist hier wie bei der in Figuren 11 bis 15 gezeigten Kraftübertragungsvorrichtung, so dass nachfolgend nur die Unterschiede beschrieben werden.

Anstelle des in den Figuren 11 bis 15 gezeigten einzelnen Permanentmagneten 6 mit veränderlicher Magnetisierung, der (entlang der Rotationsachse R gesehen) so angeordnet ist, dass der innere Eisenjochteil 3a-y2 komplett in zwei symmetrische Teile aufgeteilt ist, sind hier nun zwei getrennte Permanentmagnetteile 6a, 6b mit veränderlicher Magnetisierung vorgesehen, die das innere Eisenjochteil 3a-y2 des inneren Kolbens 3a komplett in drei vollständig voneinander geteilte Teile trennen. Auch hier entspricht der Außendurchmesser der als kreisförmige Scheiben ausgebildeten Teile 6a, 6b somit dem Innendurchmesser des Elektromagneten 1. Die beiden Teile 6a, 6b sind somit gegenüber dem in den Figuren 11 bis 15 gezeigten Einzelmagneten 6 entlang der Rotationsachse R vom Zentrum der Anordnung nach außen hin um jeweils denselben Streckenabschnitt verschoben, so dass der innere Eisenjochabschnitt 3a-y2 hier vollständig in drei Teile geteilt ist.

Figur 17 zeigt somit eine Abwandlung des in Figuren 11 bis 15 gezeigten Ausführungsbeispiels, das eine Teilung des veränderlichen Permanentmagneten 6 in die zwei Teile 6a, 6b vorsieht. Die Teile 6a, 6b sind über das magnetisch gut leitende Material des zentral angeordneten Teils der drei Teile des inneren Jochteils 3a-y2 miteinander verbunden und somit optimal im inneren Joch 3a-y2 integriert. Die Magnetkreisausbildung unterscheidet sich nicht von der im Ausführungsbeispiel der Figuren 11 bis 15 gezeigten.

## Patentansprüche

1. Magnetorheologische Drehmomentübertragungsvorrichtung umfassend mindestens zwei durch mindestens einen Übertragungsspalt (2) zur Drehmomentübertragung, der zumindest teilweise mit einem magnetorheologischen Material (2MRF) gefüllt ist, getrennte, relativ zueinander um eine Rotationsachse (R) rotierbare Vorrichtungsteile,
wobei das zur Erzeugung des magnetischen Flusses in zumindest einem Teil des Übertragungsspalts (2) ausgebildete Magnetkreissystem der Drehmomentübertragungsvorrichtung neben mindestens einem Elektromagneten (1) mindestens einen Permanentmagneten (6) mit veränderlicher Magnetisierung umfasst, wobei der Elektromagnet und der Permanentmagnet (6) mit veränderlicher Magnetisierung so ausgebildet und angeordnet sind, dass die Magnetisierung dieses Permanentmagneten (6) durch Veränderung des Spulenstroms des Elektromagneten einstellbar ist,
**dadurch gekennzeichnet, dass**
das Magnetkreissystem der Drehmomentübertragungsvorrichtung weiterhin mindestens einen Permanentmagneten (4) mit nicht-veränderlicher Magnetisierung umfasst.

2. Magnetorheologische Kraftübertragungsvorrichtung umfassend
mindestens zwei im Wesentlichen translatorisch relativ zueinander bewegbare Vorrichtungsteile (3a, 3b) und
mindestens einen Übertragungsspalt (2) zur Kraftübertragung, der zumindest teilweise mit einem magnetorheologischen Material (2MRF) gefüllt ist und zumindest teilweise in einem der Vorrichtungsteile, zumindest teilweise in beiden Vorrichtungsteilen und/oder zumindest teilweise zwischen den beiden Vorrichtungsteilen angeordnet ist,
wobei das zur Erzeugung des magnetischen Flusses in zumindest einem Teil des Übertragungsspalts (2) ausgebildete Magnetkreissystem der Kraftübertragungsvorrichtung neben mindestens einem Elektromagneten (1) mindestens einen Permanentmagneten (6) mit veränderlicher Magnetisierung umfasst, wobei der Elektromagnet und der Permanentmagnet (6) mit veränderlicher Magnetisierung so ausgebildet und angeordnet sind, dass die Magnetisierung dieses Permanentmagneten (6) durch Veränderung des Spulenstroms des Elektromagneten einstellbar ist,
**dadurch gekennzeichnet, dass**
das Magnetkreissystem der Kraftübertragungsvorrichtung weiterhin mindestens einen Permanentmagneten (4) mit nicht-veränderlicher Magnetisierung umfasst.

3. Magnetorheologische Übertragungsvorrichtung nach Anspruch 1 oder 2,
**dadurch gekennzeichnet, dass**
der Permanentmagnet (4) mit nicht-veränderlicher Magnetisierung ein Material enthält oder daraus besteht, dessen Koerzitivfeldstärke _{J}H_{C} um mindestens den Faktor 2, bevorzugt um mindestens den Faktor 4, bevorzugt um mindestens den Faktor 8, bevorzugt um mindestens den Faktor 16, bevorzugt um mindestens den Faktor 32 größer ist, als diejenige des Materials, das der Permanentmagnet (6) mit veränderlicher Magnetisierung enthält oder aus dem dieser besteht.

4. Magnetorheologische Übertragungsvorrichtung nach einem der vorhergehenden Ansprüche,
***dadurch gekennzeichnet, dass***
der Permanentmagnet (6) mit veränderlicher Magnetisierung ein Material enthält oder daraus besteht, dessen Koerzitivfeldstärke _{J}H_{C} zwischen 5 und 300 kA/m, bevorzugt zwischen 20 und 200 kA/m, bevorzugt zwischen 30 und 100 kA/m liegt
und/oder
dass der Permanentmagnet (6) mit veränderlicher Magnetisierung mindestens eines der nachfolgenden magnetischen Materialien enthält und/oder daraus besteht: eine Legierung enthaltend Al, Ni und Co (AlNiCo) und/oder Ferrite, insbesondere aus Barium- oder Strontiumoxid mit Eisenoxid.

5. Magnetorheologische Übertragungsvorrichtung nach einem der vorhergehenden Ansprüche,
***dadurch gekennzeichnet, dass***
der Permanentmagnet (4) mit nicht-veränderlicher Magnetisierung ein Material enthält oder daraus besteht, dessen Koerzitivfeldstärke _{J}H_{C} größer 300 kA/m, bevorzugt größer 500 kA/m, bevorzugt größer 1000 kA/m, bevorzugt größer 1500 kA/m ist
und/oder
dass der Permanentmagnet (4) mit nicht-veränderlicher Magnetisierung mindestens eines der nachfolgenden hartmagnetischen Materialien enthält und/oder daraus besteht: eine Legierung enthaltend Sm und Co, insbesondere SmCo₅ oder Sm₂Co₁₇, und/oder eine Legierung enthaltend Nd, Fe und B (NdFeB).

6. Magnetorheologische Übertragungsvorrichtung nach einem der vorhergehenden Ansprüche,
***dadurch gekennzeichnet, dass***
das zur Erzeugung des magnetischen Flusses in zumindest einem Teil des Übertragungsspalts (2) ausgebildete Magnetkreissystem der Übertragungsvorrichtung neben mindestens einem Elektromagneten (1) mindestens zwei Permanentmagnete (6a,6b) mit veränderlicher Magnetisierung, welche über magnetisch leitendes Material miteinander magnetisch gekoppelt sind, umfasst, wobei der Elektromagnet und diese beiden Permanentmagnete so ausgebildet und angeordnet sind, dass die Magnetisierung dieser beiden Permanentmagnete durch Veränderung des Spulenstroms des Elektromagneten einstellbar ist.

7. Magnetorheologische Übertragungsvorrichtung nach einem der vorhergehenden Ansprüche,
***dadurch gekennzeichnet, dass***
das Magnetkreissystem der Übertragungsvorrichtung weiterhin mindestens einen nichtmagnetischen Einsatz (5) in Form eines magnetfeldregulierenden Einsatzes und/oder eines magnetischen Isolators umfasst.

8. Magnetorheologische Übertragungsvorrichtung nach einem der vorhergehenden Ansprüche,
***dadurch gekennzeichnet, dass***
das Magnetkreissystem der Übertragungsvorrichtung mindestens zwei Magnetkreise (ersten und zweiten Magnetkreis) aufweist, wobei der Elektromagnet (1) und der Permanentmagnet (6) mit veränderlicher Magnetisierung so ausgebildet und angeordnet sind, dass sie dem zweiten Magnetkreis angehören und wobei der Permanentmagnet (4) mit nicht-veränderlicher Magnetisierung so ausgebildet und angeordnet ist, dass er dem ersten Magnetkreis angehört.

9. Magnetorheologische Übertragungsvorrichtung nach einem der vorhergehenden Ansprüche,
***dadurch gekennzeichnet, dass***
das Magnetkreissystem der Übertragungsvorrichtung mindestens einen Elektromagneten (1), zwei Permanentmagnete (4a, 4b) mit nicht-veränderlicher Magnetisierung, einen Permanentmagnet (6) mit veränderlicher Magnetisierung und bevorzugt auch zwei Übertragungsspalte (2ab, 2bc) umfasst.

10. Magnetorheologische Übertragungsvorrichtung nach einem der vorhergehenden Ansprüche,
***dadurch gekennzeichnet, dass***
das Magnetkreissystem der Übertragungsvorrichtung 2S-1 Elektromagnete mit pro Elektromagnet jeweils mindestens einem zugeordneten Permanentmagneten mit veränderlicher Magnetisierung (mit S = 1,2,3,...) und 2P Permanentmagnete mit nicht-veränderlicher Magnetisierung (P=1,2,3...) umfasst, wobei bevorzugt P=S gilt.

11. Magnetorheologische Übertragungsvorrichtung nach einem der vorhergehenden Ansprüche,
***gekennzeichnet durch***
einen nichtmagnetischen Einsatz (5) in Form eines magnetischen Isolators, der in dem, an dem und/oder um den Permanentmagnet (4) mit nicht-veränderlicher Magnetisierung, bevorzugt konzentrisch um den Permanentmagnet (4) mit nicht-veränderlicher Magnetisierung angeordnet ist.

12. Magnetorheologische Drehmomentübertragungsvorrichtung nach dem Anspruch 1 sowie gegebenenfalls mindestens einem weiteren der vorhergehenden Ansprüche,
***gekennzeichnet durch***
die Ausbildung als Kupplung, Bremse, Drehschwingungsdämpfer, Feststell- oder Blockiervorrichtung, Sicherheitsschalter, haptisches Gerät oder als Mensch-Maschine-Schnittstellenelement.

13. Verwendung einer magnetorheologischen Übertragungsvorrichtung nach einem der vorhergehenden Ansprüche als Kupplung, Bremse, Dämpfungsvorrichtung, insbesondere als elektrisch ansteuerbare Dämpfungsvorrichtung und/oder als Aufpralldämpfer, Stoßdämpfer oder Schwingungsdämpfer, insbesondere als Drehschwingungsdämpfer, Feststell- oder Blockiervorrichtung, Sicherheitsschalter, haptisches Gerät oder als Mensch-Maschine-Schnittstellenelement.

14. Magnetorheologische Drehmomentübertragungsverfahren
bei dem zwei durch mindestens einen Übertragungsspalt (2) zur Drehmomentübertragung, der zumindest teilweise mit einem magnetorheologischen Material (2MRF) gefüllt ist, getrennte, Vorrichtungsteile einer Drehmomentübertragungsvorrichtung relativ zueinander um eine Rotationsachse (R) rotiert werden und bei dem zumindest in einem Teil des Übertragungsspaltes ein magnetischer Fluss erzeugt wird, und
bei dem der magnetische Fluss in zumindest einem Teil des Übertragungsspalts (2) mittels mindestens eines Elektromagneten (1) und mindestens eines Permanentmagneten (6) mit veränderlicher Magnetisierung erzeugt wird, wobei die Magnetisierung dieses Permanentmagneten (6) mit veränderlicher Magnetisierung durch Veränderung des Spulenstroms des Elektromagneten eingestellt wird,
**dadurch gekennzeichnet, dass**
das Magnetkreissystem der Drehmomentübertragungsvorrichtung weiterhin mit mindestens einem Permanentmagneten (4) mit nicht-veränderlicher Magnetisierung versehen wird.

15. Magnetorheologisches Kraftübertragungsverfahren
bei dem zwei Vorrichtungsteile (3a, 3b) einer Kraftübertragungsvorrichtung im Wesentlichen translatorisch relativ zueinander bewegt werden,
bei dem zumindest in einem Teil eines Übertragungsspalts (2) zur Kraftübertragung, der zumindest teilweise mit einem magnetorheologischen Material (2MRF) gefüllt ist und der zumindest teilweise in einem der Vorrichtungsteile, zumindest teilweise in beiden Vorrichtungsteilen und/oder zumindest teilweise zwischen den beiden Vorrichtungsteilen angeordnet ist, ein magnetischer Fluss erzeugt wird, und
bei dem der magnetische Fluss in zumindest einem Teil des Übertragungsspalts (2) mittels mindestens eines Elektromagneten (1) und mindestens eines Permanentmagneten (6) mit veränderlicher Magnetisierung erzeugt wird, wobei die Magnetisierung dieses Permanentmagneten (6) mit veränderlicher Magnetisierung durch Veränderung des Spulenstroms des Elektromagneten eingestellt wird,
**dadurch gekennzeichnet, dass**
das Magnetkreissystem der Kraftübertragungsvorrichtung weiterhin mit mindestens einem Permanentmagneten (4) mit nicht-veränderlicher Magnetisierung versehen wird.

## Claims

1. Magnetorheological torque transmission device comprising at least two device parts separated by at least one transmission gap (2) for transmitting torque, which is at least partially filled with a magnetorheological material (2MRF), with the device parts being rotatable relative to each other around an axis of rotation (R),
wherein the magnetic circuit system of the torque transmission device comprises at least one permanent magnet (6) with variable magnetisation, in addition to at least one electromagnet (1), for generating the magnetic flux in at least one part of the transmission gap (2), wherein the electromagnet and the permanent magnet (6)with alterable magnetisation are designed and arranged in such a way that the magnetisation of this permanent magnet (6) can be adjusted by altering the coil current of the electromagnet,
**characterised in that**,
the magnetic circuit system of the torque transmission device furthermore comprises at least one permanent magnet (4) with non-alterable magnetisation.

2. Magnetorheological power transmission device, comprising
at least two device parts (3a, 3b) being substantially translationally movable relative to each other, and
at least one transmission gap (2) for power transmission, which is at least partially filled with a magnetorheological material (2MRF) and which is arranged at least partially in one of the device parts, at least partially in both device parts and/or at least partially between both device parts,
wherein the magnetic circuit system designed to generate the magnetic flux in at least one part of the transmission gap (2) comprises at least one permanent magnet (6) with alterable magnetisation, in addition to at least one electromagnet (1), wherein the electromagnet and the permanent magnet (6)with alterable magnetisation are designed and arranged in such a way that the magnetisation of this permanent magnet (6) can be adjusted by altering the coil current of the electromagnet,
**characterised in that**,
the magnetic circuit system of the power transmission device furthermore comprises at least one permanent magnet (4) with non-alterable magnetisation.

3. Magnetorheological transmission device according to claim 1 or 2,
**characterised in that**,
the permanent magnet (4) with non-alterable magnetisation contains or consists of a material whose coercive field strength _{J}H_{C} is greater, at least by a factor of 2, preferably at least by a factor of 4, preferably at least by a factor of 8, preferably at least by a factor of 16, preferably at least by a factor of 32, than that of the material that the permanent magnet (6) with alterable magnetisation contains or consists of.

4. Magnetorheological transmission device according to one of the preceding claims,
**characterised in that**,
the permanent magnet (6) with alterable magnetisation contains or consists of a material whose coercive field strength _{J}H_{C} is between 5 and 300kA/m, preferably between 20 and 200 kA/m, preferably between 30 and 100kA/m
and/or
that the permanent magnet (6) with alterable magnetisation contains and/or consists of at least one of the following magnetic materials: an alloy containing Al, Ni and Co (AlNiCo) and/or ferrites, in particular from barium or strontium oxide with iron oxide.

5. Magnetorheological transmission device according to one of the preceding claims,
**characterised in that**,
the permanent magnet (4) with non-alterable magnetisation contains or consists of a material whose coercive field strength _{J}H_{C} is greater than 300kA/m, preferably greater than 500kA/m, preferably greater than 1000kA/m, preferably greater than 1500kA/m
and/or
that the permanent magnet (4) with non-alterable magnetisation contains and/or consists of at least one of the following magnetically hard materials: an alloy containing Sm and Co, in particular SmCo₅ or Sm₂Co₁₇, and/or an alloy containing Nd, Fe and B (NdFeB).

6. Magnetorheological transmission device according to one of the preceding claims,
**characterised in that**,
the magnetic circuit system designed to generate the magnetic flux in at least one part of the transmission gap (2) comprises at least two permanent magnets (6a, 6b) with alterable magnetisation, which are magnetically coupled to each other via magnetically conductive material, in addition to at least one electromagnet (1), wherein the electromagnet and both of these permanent magnets are designed and arranged in such a way that the magnetisation of both of these permanent magnets can be adjusted by altering the coil current of the electromagnet.

7. Magnetorheological transmission device according to one of the preceding claims,
**characterised in that**,
the magnetic circuit system of the transmission device furthermore comprises at least one non-magnetic application (5) in the form of a magnetic-field-regulating application and/or a magnetic insulator.

8. Magnetorheological transmission device according to one of the preceding claims,
**characterised in that**,
the magnetic circuit system of the transmission device has at least two magnetic circuits (first and second magnetic circuit), wherein the electromagnet (1) and the permanent magnet (6) with alterable magnetisation are designed and arranged in such a way that they are part of the second magnetic circuit and wherein the permanent magnet (4) with non-alterable magnetisation is designed and arranged in such a way that it is part of the first magnetic circuit.

9. Magnetorheological transmission device according to one of the preceding claims,
**characterised in that**,
the magnetic circuit system of the transmission device comprises at least one electromagnet (1), two permanent magnets (4a, 4b) with non-alterable magnetisation, a permanent magnet (6) with alterable magnetisation and preferably also two transmission gaps (2ab, 2bc).

10. Magnetorheological transmission device according to one of the preceding claims,
**characterised in that**,
the magnetic circuit system of the transmission device 2S-1 comprises electromagnets with at least one permanent magnet with alterable magnetisation (with S = 1, 2, 3...) assigned respectively per electromagnet and 2P permanent magnets with non-alterable magnetisation (P = 1, 2, 3), wherein it is preferred that P=S.

11. Magnetorheological transmission device according to one of the preceding claims,
**characterised by**
a non-magnetic insertion(5) in the form of a magnetic insulator, which is arranged in, on and/or around the permanent magnet (4) with non-alterable magnetisation, preferably concentrically around the permanent magnet (4) with non-alterable magnetisation.

12. Magnetorheological transmission device according to claim 1 and, if necessary, at least one other of the preceding claims.
**characterised by**
the design as a clutch, brake, torsional vibration damper, locking or arresting device, security switch, haptic device or as a human-machine interface element.

13. Use of a magnetorheological transmission device according to one of the preceding claims as a clutch, brake, vibration damper, in particular as an electrically activatable damping device and/or as an impact absorber, shock absorber or oscillation damper, in particular as a torsional vibration damper, locking or arresting device, security switch, haptic device or as a human-machine interface element.

14. Magnetorheological torque transmission method,
wherein two device parts of a torque transmission device, said device parts being separated by at least one transmission gap (2) for transmitting torque, which is at least partially filled with a magnetorheological material (2MRF), are rotated around a rotational axis (R) relative to each other and wherein at least one magnetic flux is generated in one part of the transmission gap, and
wherein the magnetic flux is generated in at least one part of the transmission gap (2) by means of at least one electromagnet (1) and at least one permanent magnet (6) with alterable magnetisation, wherein the magnetisation of this permanent magnet (6) is adjusted by altering the coil current of the electromagnet,
**characterised in that**,
the magnetic circuit system of the torque transmission device furthermore has at least one permanent magnet (4) with non-alterable magnetisation added to it.

15. Magnetorheological power transmission method,
wherein two device parts (3a, 3b) of a power transmission device are moved substantially translationally relative to each other,
wherein a magnetic flux is generated at least in one part of a transmission gap (2) for power transmission, said transmission gap being at least partially filled with a magnetorheological material (2MRF) and being at least partially in one of the device parts, at least partially in both device parts and/or at least partially between both device parts, and
where the magnetic flux is generated in at least one part of the transmission gap (2) by means of at least one electromagnet (1) and at least one permanent magnet (6) with alterable magnetisation, wherein the magnetisation of this permanent magnet (6) with alterable magnetisation is adjusted by altering the coil current of the electromagnet,
**characterised in that**,
the magnet circuit system of the power transmission device further has at least one permanent magnet (4) with non-alterable magnetisation added to it.

## Revendications

1. Dispositif magnétorhéologique de transmission de couple, comprenant au moins deux pièces de dispositif pouvant tourner l'une par rapport à l'autre autour d'un axe de rotation (R), séparées par au moins une fente de transmission (2) destinée à la transmission du couple et remplie au moins partiellement avec un matériau magnétorhéologique (2MRF),
dans lequel le système de circuit magnétique du dispositif de transmission de couple réalisé dans au moins une partie de la fente de transmission (2) en vue de produire le flux magnétique comprend, outre au moins un électroaimant (1), au moins un aimant permanent (6) à magnétisation variable, dans lequel l'électroaimant et l'aimant permanent (6) à magnétisation variable sont réalisés et agencés de telle sorte que la magnétisation de cet aimant permanent (6) peut être réglée par la variation du courant de bobine de l'électroaimant,
**caractérisé en ce que**
le système de circuit magnétique du dispositif de transmission de couple comprend en outre au moins un aimant permanent (4) à magnétisation non variable.

2. Dispositif magnétorhéologique de transmission de force, comprenant au moins deux pièces de dispositif (3a, 3b) mobiles l'une par rapport à l'autre de façon sensiblement translationnelle et
au moins une fente de transmission (2) destinée à la transmission de force et remplie au moins partiellement avec un matériau magnétorhéologique (2MRF), et agencée au moins partiellement dans une des pièces de dispositif, au moins partiellement dans les deux pièces de dispositif et/ou au moins partiellement entre les deux pièces de dispositif,
dans lequel le système de circuit magnétique du dispositif de transmission de force réalisé dans au moins une partie de la fente de transmission (2) en vue de produire le flux magnétique comprend, outre au moins un électroaimant (1), au moins un aimant permanent (6) à magnétisation variable, dans lequel l'électroaimant et l'aimant permanent (6) à magnétisation variable sont réalisés et agencés de telle sorte que la magnétisation de cet aimant permanent (6) peut être réglée par la variation du courant de bobine de l'électroaimant,
**caractérisé en ce que**
le système de circuit magnétique du dispositif de transmission de force comprend en outre au moins un aimant permanent (4) à magnétisation non variable.

3. Dispositif magnétorhéologique de transmission selon la revendication 1 ou 2, **caractérisé en ce que**
l'aimant permanent (4) à magnétisation non variable contient, ou est composé de, un matériau dont l'intensité de champ coercitif _{J}H_{C} est supérieure d'au moins un facteur 2, de préférence d'au moins un facteur 4, de préférence d'au moins un facteur 8, de préférence d'au moins un facteur 16, de préférence d'au moins un facteur 32, à celle du matériau que l'aimant permanent (6) à magnétisation variable contient ou dont il est composé.

4. Dispositif magnétorhéologique de transmission selon une des revendications précédentes,
***caractérisé en ce que***
l'aimant permanent (6) à magnétisation variable contient, ou est composé de, un matériau dont l'intensité de champ coercitif _{J}H_{C} est comprise entre 5 et 300 kA/m, de préférence entre 20 et 200 kA/m, de préférence entre 30 et 100 kA/m et/ou
**en ce que** l'aimant permanent (6) à magnétisation variable contient, ou est composé de, au moins un des matériaux magnétiques suivants : un alliage contenant Al, Ni et Co (AlNiCo) et/ou des ferrites, en particulier en oxyde de baryum ou de strontium avec de l'oxyde de fer.

5. Dispositif magnétorhéologique de transmission selon une des revendications précédentes,
***caractérisé en ce que***
l'aimant permanent (4) à magnétisation non variable contient, ou est composé de, un matériau dont l'intensité de champ coercitif _{J}H_{C} est supérieure à 300 kA/m, de préférence supérieure à 500 kA/m, de préférence supérieure à 1 000 kA/m, de préférence supérieure à 1 500 kA/m
et/ou
**en ce que** l'aimant permanent (4) à magnétisation non variable contient, ou est composé de, au moins un des matériaux magnétiques durs suivants : un alliage contenant Sm et Co, en particulier SmCo₅ ou Sm₂Co₁₇ et/ou un alliage contenant Nd, Fe et B (NdFeB).

6. Dispositif magnétorhéologique de transmission selon une des revendications précédentes,
***caractérisé en ce que***
le système de circuit magnétique du dispositif de transmission destiné à produire le flux magnétique et réalisé dans au moins une partie de la fente de transmission (2) comprend, outre au moins un électroaimant (1), au moins deux aimants permanents (6a, 6b) à magnétisation variable qui sont couplés l'un à l'autre via un matériau magnétiquement conducteur, dans lequel l'électroaimant et ces deux aimants permanents sont réalisés et agencés de telle sorte que la magnétisation de ces deux aimants permanents peut être réglée par variation du courant de bobine de l'électroaimant.

7. Dispositif magnétorhéologique de transmission selon une des revendications précédentes,
***caractérisé en ce que***
le système de circuit magnétique du dispositif de transmission comprend en outre au moins un insert non magnétique (5) sous forme d'un insert de régulation du champ magnétique et/ou d'un isolateur magnétique.

8. Dispositif magnétorhéologique de transmission selon une des revendications précédentes,
***caractérisé en ce que***
le système de circuit magnétique du dispositif de transmission présente au moins deux circuits magnétiques (premier et deuxième circuit magnétique), dans lequel l'électroaimant (1) et l'aimant permanent (6) à magnétisation variable sont réalisés et agencés de telle sorte qu'ils appartiennent au deuxième circuit magnétique, et dans lequel l'aimant permanent (4) à magnétisation non variable est réalisé et agencé de telle sorte qu'il appartient au premier circuit magnétique.

9. Dispositif magnétorhéologique de transmission selon une des revendications précédentes,
***caractérisé en ce que***
le système de circuit magnétique du dispositif de transmission comprend au moins un électroaimant (1), deux aimants permanents (4a, 4b) à magnétisation non variable, un aimant permanent (6) à magnétisation variable et de préférence également deux fentes de transmission (2ab, 2bc).

10. Dispositif magnétorhéologique de transmission selon une des revendications précédentes,
**caractérisé en ce que**,
le système de circuit magnétique du dispositif de transmission comprend 2S-1 électroaimants avec, pour chaque électroaimant, respectivement au moins un électroaimant affecté à magnétisation variable (avec S = 1, 2, 3, ...) et 2P aimants permanents à magnétisation non variable (P = 1, 2, 3, ...), l'égalité P=S étant de préférence présente.

11. Dispositif magnétorhéologique de transmission selon une des revendications précédentes,
***caractérisé par***
un insert non magnétique (5) sous la forme d'un isolateur magnétique, qui est agencé dans, sur et/ou autour de l'aimant permanent (4) à magnétisation non variable, de préférence de façon concentrique autour de l'aimant permanent (4) à magnétisation non variable.

12. Dispositif magnétorhéologique de transmission de couple selon la revendication 1 ainsi que, éventuellement, selon au moins une autre des revendications précédentes,
***caractérisé par***
la constitution en tant qu'accouplement, frein, amortisseur de vibrations torsionnelles, dispositif d'immobilisation ou de blocage, interrupteur de sécurité, appareil haptique ou en tant qu'élément d'interface homme-machine.

13. Utilisation d'un dispositif magnétorhéologique de transmission selon une des revendications précédentes en tant qu'accouplement, frein, dispositif d'amortissement, en particulier en tant que dispositif d'amortissement à commande électrique et/ou en tant qu'amortisseur d'impact, amortisseur de chocs ou amortisseur d'oscillations, en particulier en tant qu'amortisseur de vibrations torsionnelles, dispositif d'immobilisation ou de blocage, interrupteur de sécurité, appareil haptique ou en tant qu'un élément d'interface homme-machine.

14. Procédé magnétorhéologique de transmission de couple,
dans lequel deux pièces de dispositif d'un dispositif de transmission de couple, séparées par au moins une fente de transmission (2) destinée à la transmission du couple et qui est remplie au moins partiellement avec un matériau magnétorhéologique (2MRF), sont mises en rotation l'une par rapport à l'autre autour d'un axe de rotation (R), et dans lequel un flux magnétique est produit au moins dans une partie de la fente de transmission,
dans lequel le flux magnétique est produit dans au moins une partie de la fente de transmission (2) au moyen d'au moins un électroaimant (1) et d'au moins un aimant permanent (6) à magnétisation variable, dans lequel la magnétisation de cet aimant permanent (6) à magnétisation variable est réglée par la variation du courant de bobine de l'électroaimant,
**caractérisé en ce que**
le système de circuit magnétique du dispositif de transmission de couple est en outre muni d'au moins un aimant permanent (4) à magnétisation non variable.

15. Procédé magnétorhéologique de transmission de force
dans lequel deux pièces de dispositif (3a, 3b) d'un dispositif de transmission de force sont déplacées l'une par rapport à l'autre de façon sensiblement translationnelle,
dans lequel un flux magnétique est produit dans au moins une partie d'une fente de transmission (2) destinée à la transmission de force et remplie au moins partiellement avec un matériau magnétorhéologique (2MRF) et agencée au moins partiellement dans une des pièces de dispositif, au moins partiellement dans les deux pièces de dispositif et/ou au moins partiellement entre les deux pièces de dispositif, et
dans lequel le flux magnétique est produit dans au moins une partie de la fente de transmission (2) au moyen d'au moins un électroaimant (1) et d'au moins un aimant permanent (6) à magnétisation variable, dans lequel la magnétisation de cet aimant permanent (6) à magnétisation variable est réglée par la variation du courant de bobine de l'électroaimant,
**caractérisé en ce que**
le système de circuit magnétique du dispositif de transmission de force est en outre muni d'au moins un aimant permanent (4) à magnétisation non variable.
